Europäisches Patentamt

European Patent Office

Office européen des brevets

(11) Publication number: **0 106 359**
**B1**

(12) **EUROPEAN PATENT SPECIFICATION**

(45) Date of publication of patent specification: **21.03.90**

(21) Application number: **83110384.1**

(22) Date of filing: **18.10.83**

(51) Int. Cl.⁵: **B 23 B 31/16**

(54) **Chuck jaw changer for a machine tool.**

(30) Priority: **19.10.82 JP 183881/82**

(43) Date of publication of application:
**25.04.84 Bulletin 84/17**

(45) Publication of the grant of the patent:
**21.03.90 Bulletin 90/12**

(84) Designated Contracting States:
**DE FR GB IT**

(56) References cited:
**DE-A-2 805 828**
**DE-B-2 610 389**
**GB-A-1 573 338**
**GB-A-2 046 144**

(73) Proprietor: **Howa Kogyo Kabushiki Kaisha**
**32-3, Meieki 2-chome Nakamura-ku**
**Nagoya-shi Aichi-ken (JP)**

(72) Inventor: **Miyachi, Chihoro**
**180, Higashi-Biwajima-Cho Nishi-KU**
**Nagoya-Shi Aichi-Ken (JP)**

(74) Representative: **Klunker, Hans-Friedrich, Dr.**
**et al**
**Patentanwälte Klunker . Schmitt-Nilson . Hirsch**
**Winzererstrasse 106**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a chuck jaw changer for a machine tool according to the preamble of claim 1.

In particular, the chuck jaw changer according to the invention may be used on lathes and may be used for automatically changing the gripping jaws of the chuck as required by the sizes of the workpieces to be held thereby.

With the advent and dissemination of the numerical control (N/C or NC) technique, the metalworking industry has concentrated research and development efforts on the automation of all phases of machine tooling. The change of chuck jaws is no exception. A variety of devices have been suggested, some of which have been commercially accepted, for automatically changing the gripping jaws of chucks on lathes and other classes of machine tools.

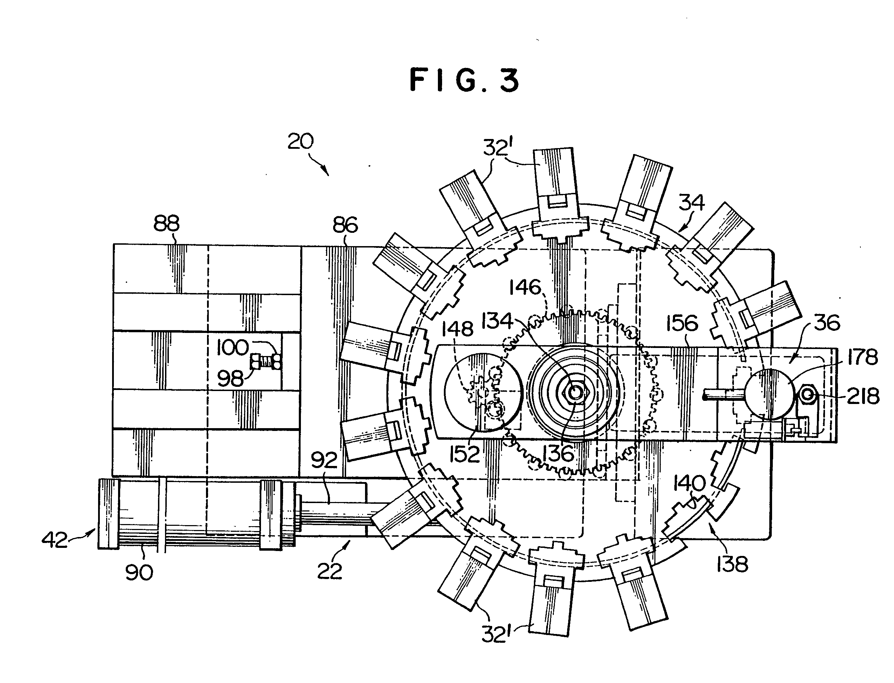

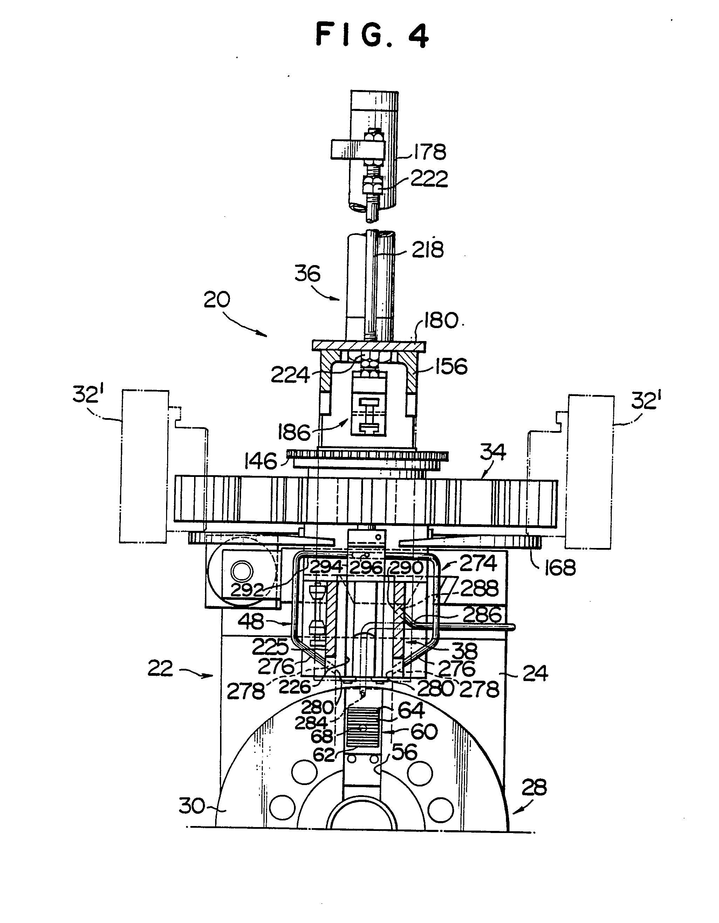

A chuck jaw changer of the kind indicated in the preamble of claim 1 is known from GB—A—2,046,144, in particular the embodiment of Figs. 3 and 4 thereof. With such chuck jaw changer, the rotatably mounted jaw magazine cannot be moved in the longitudinal direction of the work spindle, the jaw transfer mechanism is provided by a tool revolver mounted on a tool carriage and carrying a tool holder as well as a transfer pin, and the jaw being changed is transferred directly from the respective holder portion of the jaw magazine to the respective guideway of the chuck body and vice versa.

The invention seeks to provide a compact, reliable, and inexpensive chuck jaw changer for use on a machine tool.

According to the invention, the chuck jaw changer is characterized by the features of claim 1.

Preferred embodiments of the invention are defined in the dependent claims.

The chuck jaw changer according to the invention is retractable on the machine tool for avoiding its interference with machining operation. The space required for jaw transfer between the chuck body and the jaw magazine is reduced to a minimum. The gripping jaws can be positively transferred between, and mounted in position on, the chuck body and the jaw magazine even if the machining or indexing accuracy of the jaw magazine is not of the highest order; this reduces the manufacturing costs of the jaw changer.

The jaw change assembly comprising the jaw magazine, the jaw transfer mechanism and the jaw guide is made movable between working and retracted positions by longitudinal and, preferably, radial transport mechanisms. As the names imply, the longitudinal transport mechanism transports the jaw change assembly in a longitudinal direction of the work spindle of the machine tool, and the radial transport mechanism in a radial direction of the work spindle. The jaw change assembly comes to the working position close to the chuck only at the time of jaw change and is held retracted during machining operation.

Accordingly the mounting of the chuck jaw changer on a machine tool presents no impedement at all to the usual machine tool operation. Another advantage gained by the retraction of the jaw change assembly is that it is free from the attack of chips or oil and, therefore, from the trouble arising therefrom.

Further advantages of the chuck jaw changer, in part associated with preferred embodiments thereof, are:

The gripping jaws may be releasably held on the jaw magazine by particularly simple means, which materially simplifies and makes less expensive the construction of the jaw magazine including the improved jaw holding means. A pneumatic cleaning system may be provided at the chuck jaw changer for cleaning, by forced streams of air, at least the chuck and each new gripping jaw to be, or being, transferred to the chuck body and so to obviate the attachment of chips, dirt, and other foreign matter to such parts; such attachment could seriously impede the mounting of the gripping jaws on the chuck body or could increase the resistance offered by the chuck body against the sliding motion of the jaws thereby making it impossible for the jaws to firmly grip and hold the workpiece. This problem becomes all the more serious particularly if the chuck has toothed detents in its radial guideways for positive engagement with the toothed shoe portions of the gripping jaws. Chips caught in the teeth of the detents or in those of the jaw shoes can prevent their proper interengagement.

In a preferred embodiment the invention provides a positioning mechanism for locking, during jaw change, either or both of the chuck body and the jaw magazine against displacement relative to the jaw guide. Preferably the positioning mechanism includes a fluid actuated, double ended rod cylinder formed substantially integral with the jaw guide and having its two piston rods adapted for movement into and out of positive engagement with the chuck body and the jaw magazine respectively. Further, in a preferred embodiment disclosed herein, the double ended rod cylinder serves the additional purpose of unlocking each gripping jaw from the chuck body preparatory to its transfer to the jaw magazine. Thus, as the double ended rod cylinder operates to unlock one of the gripping jaws from the chuck body, its piston rods force the chuck body and the jaw magazine into exact alignment with the jaw guide and, in consequence, with each other. No other actuator than the necessary unlocking cylinder is required for thus aligning the chuck body and the jaw magazine with each other.

In the preferred embodiment the indexing jaw magazine rotates about a vertical axis, and its holder portions take the form of undercut grooves defined at constant angular spacings in the periphery of the magazine for slidably receiving the respective gripping jaws in an upstanding attitude. The invention features a substantially annular jaw rest supported under the jaw magazine so as to allow the jaws in the undercut grooves to stand thereon. The annular jaw rest is of course much easier to fabricate and mount than conventional means comprised of a large number of retainer pins, keys, and springs. Further the annular jaw rest is far less likely to give rise to trouble in operation and makes it possible to minimize the spacings between the undercut grooves in the jaw magazine for the provision of a compact, lightweight jaw changer.

The chuck jaw changer may further include a pneumatic cleaning system built into the jaw change assembly. The pneumatic cleaning system has a conduit system with air outlets positioned at points of vantage for blowing away chips and other foreign matter from the pertinent parts of the chuck and the gripping jaws being changed. Being built into the jaw change assembly, the cleaning system demands no particular installation space and presents no obstruction to the operation of the machine tool. Further the air outlets of the conduit system can be arranged sufficiently close to the desired objects for effectively cleaning the same. Pneumatic cleaning affords the additional advantage of applicability to chucks and jaws of various different designs.

Other preferred features of the invention are the subject of the dependent claims.

The above and other advantages of this invention and the manner of attaining them will become more apparent, and the invention itself will best be understood, from a study of the following description, with reference had to the attached drawings showing some preferable embodiments of the invention.

Fig. 1 is an elevation, partly a vertical section through a chuck jaw changer constructed in accordance with the principles of the invention and as mounted in position on a lathe, the view showing the jaw change assembly in a retracted position;

FIG. 2 is a view similar to FIG. 1 except that the jaw change assembly is shown in a working position on the lathe, the view also differing from FIG. 1 in showing the chuck sectioned to reveal its inner details;

FIG. 3 is a plan of the chuck jaw changer with the jaw change assembly held in the working position as in FIG. 2;

FIG. 4 is an elevation in vertical section through the chuck jaw changer, taken along the line IV—IV in FIG. 2;

FIG. 5 is a horizontal section through the chuck jaw changer, taken along the line V—V in FIG. 2 and showing in particular the annular jaw rest underlying the jaw magazine, and the air conduit system for cleaning the chuck and the gripping jaws being changed;

FIG. 6 is an enlarged front elevation of the jaw rest;

FIG. 7 is a developed elevation, partly broken away for illustrative convenience, of the jaw rest;

FIG. 8 is an enlarged elevation in vertical section taken along the line VIII—VIII in FIG. 2 and showing in particular the hook assembly of the jaw transfer mechanism;

FIG. 9 is an enlarged, fragmentary elevation in vertical section through the chuck jaw changer, showing in particular one of the gripping jaws held by the jaw magazine and engaged by the hook assembly of the jaw transfer mechanism for transfer from the jaw magazine to the chuck body;

FIG. 10 is an enlarged, fragmentary elevation in vertical section through the chuck jaw changer, taken along the line X—X in FIG. 2 and showing in particular the double acting, double ended rod cylinder in its normal or inoperative state;

FIG. 11 is a view similar to FIG. 10 except that the double ended rod cylinder is shown operating to unlock a gripping jaw from the chuck body and to position or align the chuck body and jaw magazine with the jaw guide disposed therebetween;

FIG. 12 is a top plan showing, on a still more enlarged scale, the positioning pawl on one of the piston rods of the double ended rod cylinder of FIGS. 10 and 11;

FIG. 13 is an enlarged, fragmentary plan of the notched ring on the jaw magazine in the chuck jaw changer of FIGS. 1 and 2, the positioning pawl of FIG. 12 being adapted to engage in any of the notches in the ring for positioning or aligning the jaw magazine with the jaw guide and hence with the chuck body;

FIGS. 14, 15 and 16 are fragmentary elevation partly in vertical section, showing the chuck jaw changer of FIGS. 1 and 2 in various stages of its operation;

FIG. 17 is a fragmentary elevation in vertical section showing modified means for positioning the jaw magazine with respect to the jaw guide;

FIG. 18 is a view similar to FIG. 17 but showing another modification of the means for positioning the jaw magazine with respect to the jaw guide; and

FIG. 19 is also a view similar to FIG. 17 but showing still another modification of the means for positioning the jaw magazine with respect to the jaw guide.

General

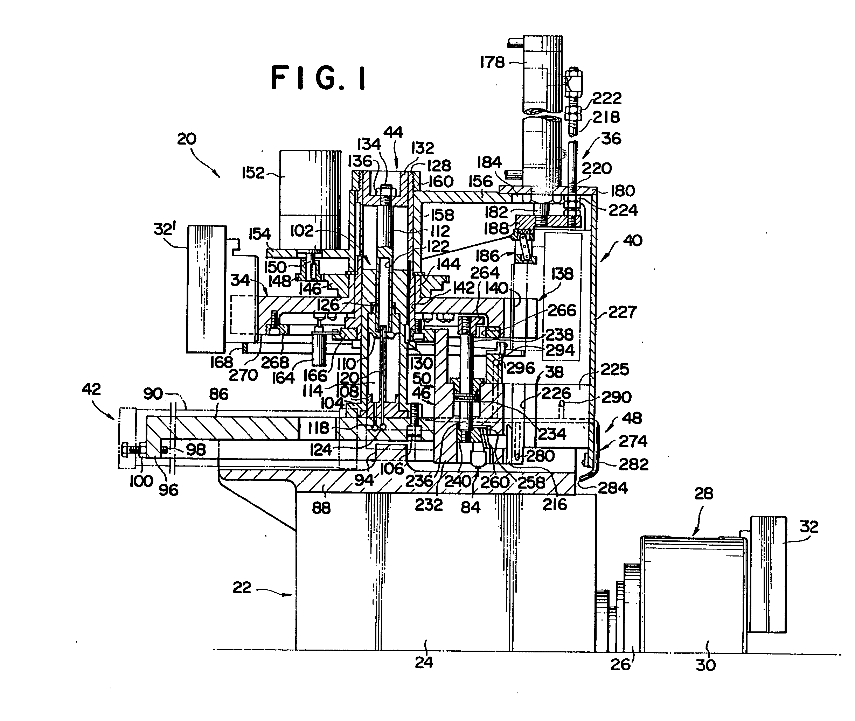

The chuck jaw changer in accordance with the invention is generally labeled 20 in FIGS. 1 through 4 and therein shown as structured for use with an N/C lathe 22 as an example of machine tools to which the invention is applicable. Inasmuch as the N/C lathe 22 is familiar to the machine tool specialists, only its headstock 24 and work spindle 26 projecting forwardly (rightwardly as viewed in FIGS. 1 through 3) therefrom are shown for simplicity and brevity.

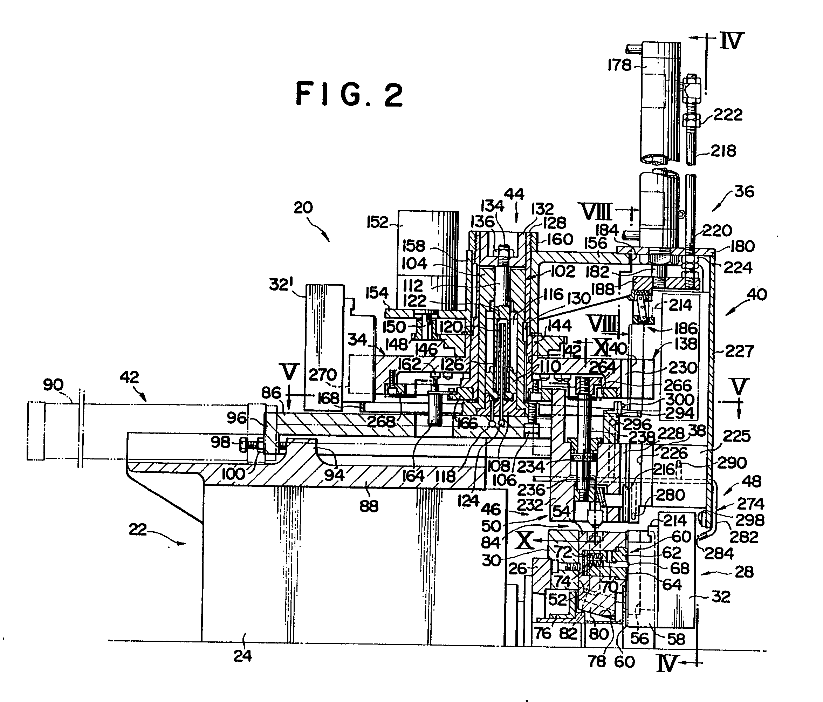

Conventionally mounted on the work spindle 26 of the N/C lathe 22 is a quick change chuck 28 which may be considered a part of the chuck jaw changer 20 for the purposes of the invention. The chuck 28 comprises a chuck body 30 rigidly attached to the work spindle 26 and a set of gripping jaws 32, one seen in FIGS. 1 and 2, replaceably mounted to the chuck body. The jaw changer 20 automatically changes the jaw set 32 on the chuck body 30 with any of several other different sets of gripping jaws 32' held in stock therein.

With reference to FIGS. 1 through 4, the chuck jaw changer 20 further comprises:

1. a rotary, indexing jaw magazine 34 releasably holding the additional sets of gripping jaws 32' at constant circumferential spacings thereon;

2. a jaw transfer mechanism 36 for the rectilinear transfer of the gripping jaws 32 and 32' between chuck body 30 and jaw magazine 34; and

3. a jaw guide 38 for guiding the gripping jaw 32 or 32' being transferred by the transfer mechanism 36 between chuck body 30 and jaw magazine 34.

The above three components 34, 36 and 38, together with other components hereinafter described, make up a jaw change assembly 40 mounted on the headstock 24 of the N/C lathe 22 for movement between a retracted position of FIG. 1 and a working position of FIG. 2. The jaw change assembly 40 stays in the retracted position during the usual machining operation of the N/C lathe 22. When moved to the working position, the jaw change assembly 40 operates to change the jaw set 32 on the chuck body 30 with any desired one of the jaw sets 32' on the jaw magazine 34. Provided for such movement of the jaw change assembly 40 between the working and retracted positions are:

1. a longitudinal transport mechanism 42 for reciprocably moving the jaw change assembly 40 longitudinally of the work spindle 26 of the N/C lathe 22 and

2. a radial transport mechanism 44 for reciprocably moving the jaw change assembly 40 radially of the work spindle 26 or of the chuck 28 thereon.

In the illustrated embodiment of the invention the radial transport mechanism 44 moves the jaw change assembly 40 vertically. The word "radial" is used because the jaw change assembly 40 may not necessarily travel vertically, but only radially of the work spindle 26, depending upon the angular position of the chuck jaw changer 20 on the machine tool. The longitudinal transport mechanism 42 moves the jaw change assembly 40 between a rear position of FIG. 1, away from the chuck 28, and a front position of FIG. 2, closer to the chuck. The radial transport mechanism 44 moves the jaw change assembly 40 between an upper position of FIG. 1, radially outward of the chuck 28, and a lower position of FIG. 2, radially inward of the chuck. The jaw change assembly 40 is in the retracted position when held in the rear position by the longitudinal transport mechanism 42 and in the upper position by the radial transport mechanism 44. In its working position, on the other hand, the jaw change assembly 40 is held in the front position by the longitudinal transport mechanism 42 and in the lower position by the radial transport mechanism 44.

The chuck jaw changer 20 further features:

1. a positioning mechanism 46 closely associated with the jaw guide 38 and functioning, during jaw change, to exactly position the chuck body 30 and jaw magazine 34 with respect to each other and to the jaw guide 38 and

2. a pneumatic cleaning system 48 for removing chips and other foreign matter from pertinent parts of the chuck body 30 and the gripping jaws 32 and 32' by forced streams of air during jaw change.

Both positioning mechanism 46 and pneumatic cleaning system 48 are built into the jaw change assembly 40 for movement between the working and retracted positions. Particular attention is directed to the positioning mechanism 46, which is shown to comprise a fluid actuated, double ended rod cylinder 50. This cylinder is a multipurpose actuator performing some important functions in addition to the positioning of the chuck body 30 and jaw magazine 34 with respect to the jaw guide 38, as will become apparent as the description proceeds.

The following is a more extensive description of the chuck jaw changer 20, which for convenience will be divided under several headings.

Quick Change Chuck

FIG. 2 reveals the lathe chuck 28 in a radial section. As will be seen also from its front view given in FIG. 4, the particular chuck adopted here is of the type known as the three jaw universal chuck, having the three gripping jaws 32 jointly moved in and out by a wedging action, although other types of chucks could be employed as well.

Mounted on the work spindle 26 for simultaneous rotation therewith, the chuck body 30 has three radial guideways 52 formed therein at constant angular spacings for slidably receiving respective slides 54. Another three radial guideways 56 are also defined in the chuck body 30 for slidably receiving the respective T sectioned shoes 58 of the gripping jaws 32. These jaw shoes are opposed to the respective slides 54 within the chuck body 30.

A locking mechanism 60 locks each gripping jaw 32 against radial displacement relative to the opposed one of the slides 54. Each locking mechanism 60 comprises a primary detent 62 mounted in each slide 54 for sliding motion toward and away from the opposed jaw shoe 58 in a direction parallel to the work spindle 26. The primary detent 62 has a series of teeth 64 cut in its front end for positive engagement with a series of teeth 66 on the opposed surface of the jaw shoe 58. A secondary detent 68 is mounted in each primary detent 62 for sliding motion in a direction parallel to the work spindle 26. This secondary detent also has a tooth on its front end for positive engagement with the teeth 66 on the jaw shoe 58. A key 70 is embedded radially in the primary detent 62 into relatively sliding engagement in a longitudinal keyway in the secondary detent 68 for preventing its detachment from the primary detent. One or more compression springs 72 act between slide 54 and primary detent 62 to urge the latter into positive engagement with the jaw shoe 58. Another compression spring 74 acts between primary detent 62 and secondary detent 68 to urge the latter into positive engagement with the jaw shoe 58.

Accordingly, as long as the primary detent 62 is sprung into toothed engagement with the jaw shoe 58, the locking mechanism 60 remains in effect to lock the gripping jaw 32 onto the opposed slide 54. When thus locked onto the slide 54, the gripping jaw 32 moves therewith along one of the radial guideways 56 relative to the chuck body 30.

Provided for the desired radial motion of the gripping jaws 32 with the slides 54, as for chucking and unchucking work, is a wedge member 76 mounted centrally in the chuck body 30 for sliding movement in its axial direction. The wedge member 76 has a plurality of, three in this embodiment, undercut grooves 78 extending at an angle to the axis of the chuck. Each slide 54 has a T sectioned wedge portion 80 slidably engaged in one undercut groove 78 in the wedge member 76. The wedge member 76 is coupled to a conventional actuating mechanism, not shown, thereby to be moved back and forth axially of the chuck 28. The bidirectional axial movement of the wedge member 76 results, of course, in theradially inward or outward movement of the slides 54 and therefore of the gripping jaws 32 along the radial guideways 56.

The gripping jaws 32 must be unlocked from the slides 54 and withdrawn out of the radial guideways 56 in the chuck body 30 for a change with some other set of jaws 32' on the jaw magazine 34. Toward this end an unlocking pin 82 is slidably mounted in each slide 54. Movable radially of the chuck, the unlocking pin 82 has an angled surface for sliding engagement with a correspondingly angled surface of the primary detent 62. The contacting angled surfaces of the primary detent 62 and unlocking pin 82 are such that upon forced depression of the unlocking pin into the slide 54, the primary detent travels rearwardly against the bias of the compression springs 72 out of engagement with the gripping jaw 32, thereby unlocking the same from the slide.

Thus disengaged from the primary detent 62, the gripping jaw 32 is nevertheless held in position on the chuck body 30 by the secondary detent 68, the latter being still in engagement with the jaw shoe 58 under the relatively light force of the compression spring 74. However, the gripping jaw 32 is movable radially of the chuck body 30 against the force of the compression spring 74 upon application of an external force.

The quick change chuck 28 of the foregoing construction rotates with the work spindle 26 under the control of the numerical control system or "director", not shown, of the N/C lathe 22. The "director" can stop the rotation of the chuck 28 in predetermined angular positions where one of the radial guideways 56 in the chuck body 30 is in what is herein called a jaw change position. Jaw change is carried out while each guideway 56 is in this jaw change position. In the illustrated embodiment of the invention, the jaw change position of the guideways 56 is vertically upward of the chuck axis as the jaw change assembly 40 is mounted on the top of the headstock 24 of the lathe 22. It is therefore apparent that the jaw change position of the guideways 56 could be in any other direction about the chuck axis depending upon the position of the jaw change assembly 40 on the machine tool.

It may be mentioned here that each unlocking pin 82 is to be activated by an unlocking mechanism 84, of which the double ended rod cylinder 50 forms a part, while the corresponding one of the guideways 56 in the chuck body 30 is in the jaw change position. More will be said about this unlocking mechanism in conjunction with the positioning mechanism 46.

Longitudinal Transport Mechanism

Reference is directed to FIGS. 1, 2 and 3 for a discussion of the longitudinal transport mechanism 42 reciprocably moving the jaw change assembly 40 longitudinally of the work spindle 26. Included is a carriage 86 carrying the jaw change assembly 40 via the radial transport mechanism 44. The carriage 86 is slidably mounted on a guide 88 laid on the headstock 24 and is thereby constrained to reciprocating movement between the rear position of FIG. 1 and the front position of FIG. 2. Rigidly mounted on the headstock 22, a fluid actuated cylinder 90 has a piston rod 92 coupled to the carriage 86 to cause such travel thereof. This cylinder will be called the longitudinal cylinder hereafter by way of distinction from other cylinders to be referred to subsequently.

The guide 88 has a limit stop 94 formed integrally thereon for limiting the forward travel of the carriage 86 in the exact front position. The carriage 86 has a depending lug 96 to which there is screw threadedly fixed an adjasting bolt 98 for movement therewith into and out of abutting engagement with the limit stop 94. The adjusting bolt 98 has a locknut 100 to be secured thereby to the carriage lug 96 in a position required for stopping the carriage 86 in the exact front position.

Radial Transport Mechanism

A study of FIGS. 1 and 2 will make clear the construction of the radial transport mechanism 44 moving the jaw change assembly 40 up and down on the carriage 86. The radial transport mechanism includes a fluid actuated, double acting cylinder 102, hereinafter referred to as the radial cylinder, mounted upstandingly on the carriage 86 with its rod end oriented upwardly. The radial cylinder 102 has a cylinder body 104 having its flanged, open end held against the carriage 86 and fastened thereto as by screws 106. An end cap 108 pressure tightly closes this open end of the cylinder body 104.

Reciprocably fitted in the cylinder body 104 is a piston 110 having a piston rod 112 extending upwardly therefrom. The piston 110 defines a lower fluid chamber 114 (FIG. 1) and an upper fluid chamber 116 (FIG. 2) in the cylinder body 104. A fluid passageway 118 extends through the carriage 86 and radial cylinder end cap 108 for the delivery and discharge of a fluid, preferably hydraulic oil, to and from the lower fluid chamber 114.

For the delivery and discharge of the fluid to and from the upper fluid chamber 116, on the other hand, a pipe 120 is formed in one piece with the radial cylinder end cap 108 and extends upwardly therefrom. The pipe 120 extends through the piston 110, slidably but pressure tightly, and is received with clearance in an axial bore 122 in the piston rod 112. The bottom end of the pipe 120 opens to a fluid passageway 124 in the carriage 86, and its top end to the piston rod bore 122. The piston rod 112 has a port 126 defined radially therein for communication of its axial bore 122 with the upper fluid chamber 116.

Thus, upon alternate delivery of the fluid under pressure to the pair of opposed fluid chambers 114 and 116 of the radial cylinder 102, its piston 110 moves up and down with the piston rod 112. The jaw change assembly 40 is coupled to this piston rod 112 for up and down motion therewith, as more fully described in the following.

Slidably fitted over the radial cylinder body 104 is a hollow magazine spindle 128 which is movable up and down relative to the cylinder body but which is restrained from angular displacement by a key 130. A cap 132 is pressfitted in the top end of the magazine spindle 128. The piston rod 112 of the radial cylinder 102 has a threaded upward extension 134 of reduced diameter extending through the cap 132 and projecting upwardly therefrom. A nut 136 is fitted over this projecting end of the piston rod extension 134 to hold the cap 132, and therefore the magazine spindle 128, tightly against the piston rod 112.

It will now be apparent that the magazine spindle 128 travels up and down with the radial cylinder piston 110. The jaw magazine 34 is rotatably mounted on this magazine spindle 128, whereas the other components of the jaw change assembly 40, such as the jaw transfer mechanism 36 and jaw guide 38, are nonrotatably mounted thereon. With the vertical reciprocation of the radial cylinder piston 110, therefore, the complete jaw change assembly 40 moves between the upper position of FIG. 1 and the lower position of FIG. 2. How the magazine spindle 128 supports the listed component of the jaw change assembly 40 will become apparent as the description progresses.

Indexing Jaw Magazine

While the rotary, indexing jaw magazine 34 appears in all of FIGS. 1 through 4, FIG. 3 best illustrates that it takes the form of a turntable in this particular embodiment of the invention. The turntable-like jaw magazine 34 has a plurality of holder portions 138 at constant circumferential spacings for releasably holding the additional sets of gripping jaws 32' as well as the set of gripping jaws 32 now shown mounted on the chuck body 30. Each holder portion 138 is shown as an undercut groove 140 (hereinafter referred to as the holder grooves) extending parallel to the axis of rotation of the jaw magazine 34 for slidably receiving the T-sectioned shoe 58 of each gripping jaw 32 or 32'.

The quick change chuck 28 is of three jaw construction, and the jaw changer 20 is intended to allow the chuck to make interchangeable use of five different sets of gripping jaws 32 and 32'. Thus the jaw magazine 34 is shown to have fifteen holder grooves 140 for these gripping jaw sets.

With reference again to FIGS. 1 and 2, the jaw magazine 34 is bored centrally at 142 and is rotatably fitted over the magazine spindle 128 which is moved up and down by the radial cylinder 102. An inspection of these figures will reveal that the jaw magazine is locked against axial displacement relative to the magazine spindle 128. Accordingly the jaw magazine 34 is both rotatable and movable vertically with respect to the carriage 86.

The jaw magazine 34 has an annular rim 144 raised from its inner edge. Fitted over this rim for joint rotation and axial displacement with the jaw magazine 34 is a driven gear 146 in mesh with a drive pinion 148 on the output shaft 150 of a motor drive unit 152 which will be referred to as the magazine motor hereafter.

The magazine motor 152 is bracketed at 154 to a support frame 156 having a portion 158 encircling the magazine spindle 128. A retainer ring 160 around the top end of the magazine spindle 128 retains the support frame 156 against axial displacement relative to the magazine spindle. Consequently, as the support frame 156 travels up and down with the jaw magazine 34, so does the magazine motor 152 with the drive pinion 148, the latter thus remaining in constant mesh with the driven gear 146.

Affixed to the underside of the jaw magazine 34 in annular arrangement are a series of switch actuators 162 for the activation of an electrical switch assembly 164. The angular positions of the switch actuators 162, on the jaw magazine 34 correspond exactly to those of the holder grooves 140 thereon. The switch assembly 164 is rigidly coupled to a mounting flange 166 on the bottom end of the magazine spindle 128.

The switch assembly 164 coacts with the series of switch actuators 162 to cause the magazine motor 152 to index the jaw magazine 34. Thus, when the jaw magazine 34 is set out of rotation in the working position of the jaw change assembly 40 depicted in FIG. 2, one of the holder grooves 140 therein, with or without a gripping jaw 32' received therein, comes into line with that one of the radial guideways 56 in the chuck body 30 which is in the jaw change position.

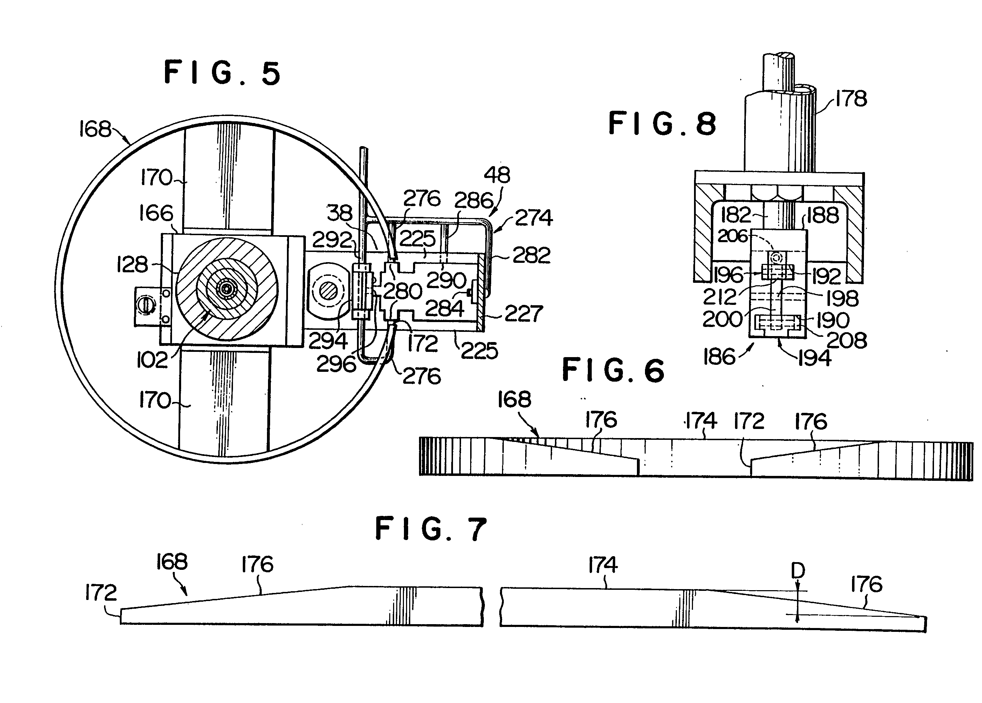

At 168 in FIGS. 1, 2 and 4 is shown an annular jaw rest underlying the jaw magazine 34 for holding thereon the gripping jaws 32' slidably engaged in the holder grooves 140 in the jaw magazine. As better seen in FIG. 5, the jaw rest 168 is circular in shape and has a pair of rigid anchor plates 170 extending radially inwardly therefrom, by which the jaw rest is secured to the mounting flange 166 on the bottom end of the magazine spindle 128 slidably fitted over the radial cylinder 102. It is therefore apparent that the jaw rest 168 is movable up and down with the jaw magazine 34 but does not rotate therewith. The jaw rest 168 is partly cut off at 172 for the passage of the gripping jaws 32 or 32' as they are transferred between chuck body 30 and jaw magazine 34, when the jaw change assembly 40 is in the working position as in FIG. 2.

Preferably, and as illustrated on an enlarged scale in FIGS. 6 and 7, the top edge 174 of the jaw rest 168, slidably holding the gripping jaws 32' thereon, slopes downwardly at 176 as it extends toward the opposite extremities of the jaw rest bounding the part 172 where it is cut off. A difference D in height exists between the nonsloping part of the top edge 174 and the lowest points of the slopes 176.

A reference back to FIGS. 2 and 4 in particular will make it easier to understand the advantages gained by the jaw rest 168 of the above configuration. As the indexing jaw magazine 34 rotates in either direction to bring one of the gripping jaws 32' to the position of register with that one of the chuck body guideways 56 which is in the jaw change position, that jaw slides down one of the jaw rest slopes 176 under its own weight. When the gripping jaw 32' reaches the required position and is caught by the jaw transfer mechanism 36 in a manner yet to be described, the vertical position of the jaw is lower the distance D than the position it occupied when it rested upon the nonsloping part of the jaw rest top edge 174. For this reason the vertical position of the jaw transfer mechanism 36 can be made lower the same distance D than that where it would have to be disposed if the top edge of the jaw rest 168 were horizontal. Chuck jaw changers in general have very narrowly confined installation spaces. The height reduction made possible by the sloping jaw rest 168, no matter how small it is, is of great significance.

Jaw Transfer Mechanism

As has been stated, the jaw transfer mechanism 36 functions to transfer the gripping jaws 32 and 32' rectilinearly between chuck body 30 and jaw magazine 34. As will be seen from FIGS. 1, 2 and 4 in particular, the jaw transfer mechanism 36 comprises a fluid actuated, double acting cylinder 178 (hereinafter referred to as the transfer cylinder) mounted uprightly on the support frame 156 via a mounting flange 180. The transfer cylinder 178 has a piston rod 182 extending downwardly therefrom through a clearance hole 184 in the support frame 156. Mounted on this piston rod 182 of the transfer cylinder is a hook assembly 186 capable of releasably engaging the gripping jaws 32 and 32' for transferring the same between chuck body 30 and jaw magazine 34 with the extension and contraction of the transfer cylinder.

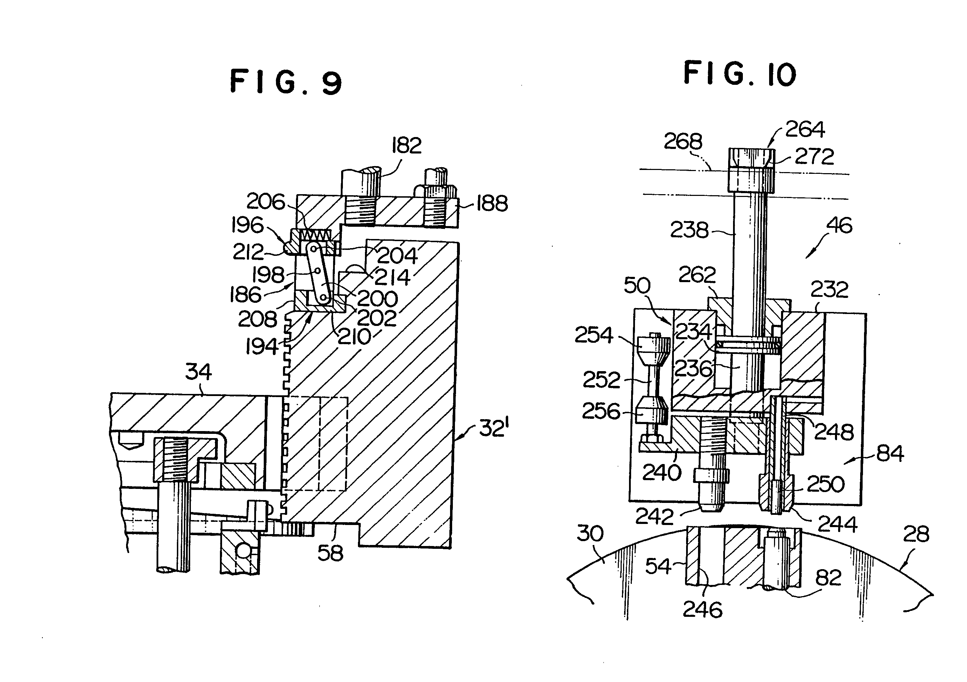

FIGS. 8 and 9 illustrate the hook assembly 186 on an enlarged scale, in rear elevation and in vertical section respectively. The hook assembly 186 includes a hook carrier 188 secured to the transfer cylinder piston rod 182. The hook carrier 188 has two vertically spaced guideways 190 and 192 formed therein, with each guideway extending parallel to the axis of the chuck 28. The lower guideway 190 has a hook 194 slidably mounted therein, whereas the upper guideway 192 has a release button 196 slidably mounted therein. Pivoted medially at 198 on the hook carrier 188 is a lever 200, the opposite ends of which are pivotally pinned at 202 and 204 to the hook 194 and release button 196. A compression spring 206 acts between hook carrier 188 and release button 196 to bias the latter rearwardly and, in consequence, to bias the hook 194 forwardly via the lever 200. The hook 194 has a rear end 208 adapted to butt against the hook carrier 188 in order to remain engaged in its guideway 190 against the bias of the compression spring 206, with the front end 210 of the hook normally projecting therefrom. The rear end 212 of the release button 196 also normally projects out of the guideway 192.

Such being the construction of the hook assembly 186, the hook 194 is normally positioned on the hook carrier 188 for engagement with an L-shaped overhang 214 formed on each gripping jaw 32 or 32' just over its shoe 58. The hook 194 moves out of engagement with the overhang 214 upon depression of the release button 196 in opposition to the force of the compression spring 206.

More specifically, when the transfer cylinder 178 is fully contracted as in FIG. 9, the hook 194 is engageable with the overhang 214 of that gripping jaw 32' on the jaw magazine 34 which has been indexed to the position of register with one of the radial guideways 56 in the chuck body 30. Upon full extension of the transfer cylinder 178, on the other hand, the hook 194 is engageable with the overhang 214 of that gripping jaw 32 on the chuck body 30 which is in the jaw change position, as will be seen upon consideration of FIG. 2.

Provided for the selective depression of the release button 196 is a retractable hook actuator 216 in the form of a short pin with a contoured head slidably mounted to the jaw guide 38. The hook actuator 216 is operatively coupled to the double ended rod cylinder 50, in a manner yet to be described, thereby to be moved in a direction parallel to the chuck axis. The hook actuator travels between a working position of FIG. 2, where it is engageable with the release button 196, and a retracted position where it is not engageable therewith.

During the extension of the transfer cylinder 178 and the consequent descent of the hook assembly 186, the hook actuator 216 lies in the working position for causing the depression of the release button 196 against the force of the compression spring 206. Thus, when the hook assembly 186 reaches the lowermost position, its hook 194 retracts into the hook carrier 188 and so becomes nonengageable with the overhang 214 of the gripping jaw in the jaw change position on the chuck body 30. Further, when the hook assembly 186 is in the lowermost position, the hook actuator 216 is retracted to allow the hook 194 to be sprung into engagement with the overhang 214 of the gripping jaw in the jaw change position on the chuck body 30. Such operation of the jaw transfer mechanism 36 will be detailed later in connection with the operation of the other components.

FIGS. 1 through 4 illustrate an upstanding rod 218 mounted on the hook carrier 188 and slidably extending upwardly through a bore 220 in the mounting flange 180 of the transfer cylinder 178. The upstanding rod 218 has a pair of stop nuts 222 and 224 threadedly mounted thereon in the vicinities of its opposite ends. The stop nuts 222 and 224 are movable into and out of abutment against the mounting flange 180 with the extension and contraction of the transfer cylinder 178, thereby serving to determine the uppermost and lowermost positions of the hook assembly 186 for proper engagement with the gripping jaws 32 and 32' on the chuck body 30 and jaw magazine 34.

Jaw Guide

One of the most pronounced features of the invention, the jaw guide 38, is formed integral with the double ended rod cylinder 50. This cylinder is mounted on the mounting flange 166 on the bottom end of the magazine spindle 128, as best shown in FIGS. 1 and 2. It is further seen from these figures and from FIG. 5 that the jaw guide 38 has a pair of forward extensions 225 anchored to a front cover 227 constituting the front end of the support frame 156. Thus, as a part of the jaw change assembly 40, the jaw guide 38 travels between the retracted position of FIG. 1 and the working position of FIG. 2.

As will be seen also from FIG. 4, the jaw guide 38 is arranged to be interposed between chuck 28 and jaw magazine 34 when the jaw change assembly 40 is in the working position. The jaw guide 38 defines an undercut guide groove 226 designed to allow the shoe 58 of each gripping jaw 32 or 32' to slide therethrough while it is being transferred between chuck body 30 and jaw magazine 34 by the jaw transfer mechanism 36. Arranged between and in line with one of the radial guideways 56 in the chuck body 30 and one of the holder grooves 140 in the jaw magazine 34, the guide groove 226 in the jaw guide 38 serves to provide a substantially continuous, rectilinear guide track for the gripping jaws 32 and 32' therebetween.

Cross-sectionally the guide groove 226 can be identical with each radial guideway 56 in the chuck body 30 and with each holder groove 140 in the jaw magazine 34. The opposite ends of the guide groove 226, however, may be flared for smooth admission of the gripping jaws 32 and 32' from the chuck body 30 and jaw magazine 34. Further, for positively guiding the gripping jaws, the guide groove 226 should have a length at least approximately equal to the length of the shoe 58 of the length of the shoe 58 of each jaw.

The jaw guide 38 has further formed therein a small channel 228 (FIG. 2) which is open to the guide groove 226. This channel 228 is intended for the passage of the rear end 212 (FIGS. 8 and 9) of the release button 196 of the hook assembly 186. The hook actuator 216 is movable into and away from the channel 228. A similar channel 230 is likewise formed next to each holder groove 140 in the jaw magazine 34 for accommodating the rear end of the release button 196.

Positioning Mechanism

The positioning mechanism 46 includes the double acting, double ended rod cylinder 50 constituting an important feature of the invention. This cylinder performs the triple function of:

1. positioning the chuck body 30 and jaw magazine 34 with respect to the jaw guide 38;

2. acting upon each unlocking pin 82 of the chuck 28 for causing the corresponding locking mechanism 60 to unlock the corresponding gripping jaw 32 from the chuck body 30; and

3. moving the hook actuator 216 between its working and retracted positions relative to the jaw guide 38.

Thus the double ended rod cylinder 50 will be called the multipurpose cylinder hereafter.

As best seen in FIGS. 1 and 2, the multipurpose cylinder 50 has a body 232 formed integral with the jaw guide 38 and secured to the mounting flange 166 on the bottom end of the magazine spindle 128. A piston 234 reciprocably mounted in the cylinder body 232 has a first piston rod oriented toward the chuck 28 when the jaw change assembly 40 is in the working position and a second piston rod 238 oriented toward the jaw magazine 34.

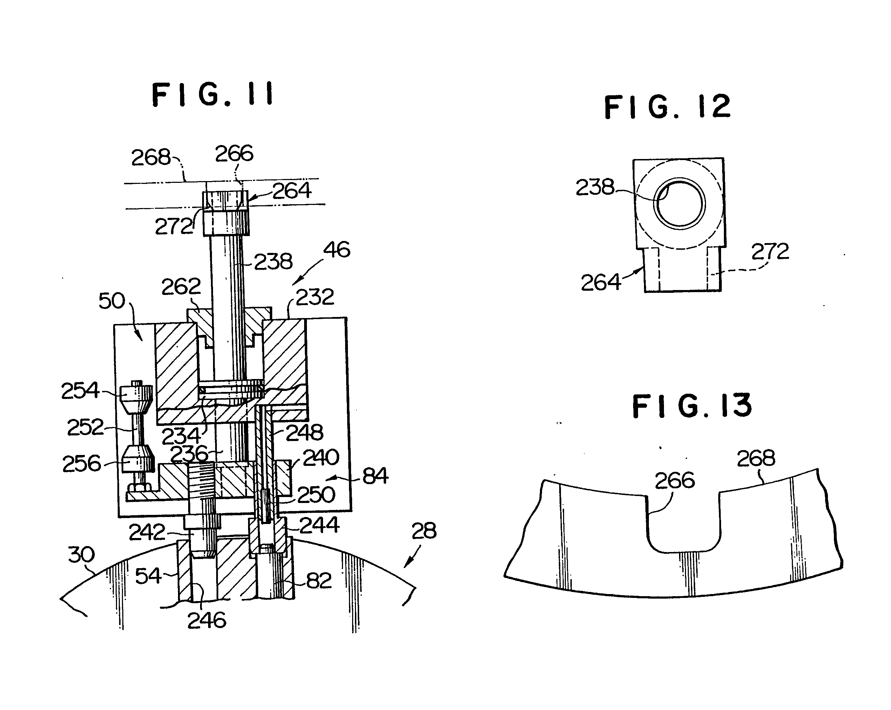

As illustrated on an enlarged scale in FIGS. 10 and 11, the multipurpose cylinder 50 has a pin carrier 240 secured to its first piston rod 236. Rigidly fixed to the pin carrier 240 and depending therefrom are a positioning pin 242 and a hollow push pin 244. When the jaw change assembly 40 is in the working position, the positioning pin 242 is movable into and out of a bore 246 in each slide 54, although this bore could be formed in the chuck body 30. Upon insertion of the positioning pin 242 in the bore 246 as in FIG. 11, the corresponding one of the radial guideways 56 in the chuck body 30 is held in the exact jaw change position.

The push pin 244, on the other hand, is movable into and out of abutting engagement with one of the unlocking pins 82 of the chuck 28 when the jaw change assembly 40 is in the working position. Upon descent of the multipurpose cylinder piston 234, as pictured in FIG. 11, the push pin 244 depresses the unlocking pin 82. The depression of this unlocking pin results, of course, in the retraction of the corresponding primary detent 62 (FIG. 2) out of engagement with the gripping jaw 32 lying in the jaw change position. The push pin 244 forms a part of the aforesaid unlocking mechanism 84.

FIGS. 10 and 11 also show a tubular member 248 rigidly embedded at one end in the multipurpose cylinder body 232 and slidably extending into the hollow push pin 244. The tubular member 248 serves the purpose of holding the positioning pin 242 and push pin 244 against angular displacement about the axis of the piston rod 236.

At 250 in FIGS. 10 and 11 is shown a proximity detector for sensing the fact that, upon release of each unlocking pin 82 by the push pin 244, the corresponding locking mechanism 60 (FIG. 2) has locked the gripping jaw 32 engaged in that one of the radial guideways 56 in the chuck body 30 which is in the jaw change position. Immovably engaged in the end of the tubular member 248 slidably received in the push pin 244, the proximity detector 250 is capable of detecting the opposed unlocking pin 82 when the push pin is retracted away from the chuck 28 as in FIG. 10. Upon depression of the unlocking pin 82 by the push pin 244 as in FIG. 11, the proximity detector becomes incapable of detecting the unlocking pin.

The pin carrier 240 also carries an upstanding rod 252 having a pair of switch actuators 254 and 256 in spaced apart positions thereon. These actuators are movable into and out of engagement with limit switches, not shown, affixed to the multipurpose cylinder body 232 and so function to determine the opposite extreme positions of the multipurpose cylinder 50.

The pin carrier 240 is further adapted as aforesaid to move the hook actuator 216 between its working and retracted positions relative to the jaw guide 38. To this end the pin carrier 240 has an undercut groove 258 (FIG. 1) formed therein at an angle to the axis of the multipurpose cylinder 50. The hook actuator 216 has a wedge portion 260 of corresponding shape slidably engaged in the undercut groove 258 in the pin carrier 240. Thus the up and down motion of the pin carrier 240 results in the horizontal displacement of the hook actuator 216.

With reference again to FIGS. 10 and 11 the second piston rod 238 of the multipurpose cylinder 50 slidably extends upwardly through an end cap 262 on the cylinder body 232. The second piston rod 238 terminates in a positioning pawl 264, shown on an enlarged scale in FIG. 12, bent right angularly therefrom and oriented radially outwardly of the jaw magazine 34. As will be seen also from FIGS. 1 and 2, the positioning pawl 264 is movable into and out of engagement in any of notches 266 cut at constant angular spacings in a ring 268 secured internally to the depending outer rim 270 of the jaw magazine 34. It will be understood that the notches 266 could be cut directly in the jaw magazine 34.

A comparison of FIGS. 12 and 13 will show that the positioning pawl 264 is sized to fit closely in each notch 266 in the ring 268. The positioning pawl 264 tapers downwardly at 272 for the ease of engagement in each notch 266.

Normally, or when the multipurpose cylinder piston 234 is raised as in FIG. 10, the positioning pawl 264 overlies the notched ring 268, allowing the indexing rotation of the jaw magazine 34. Upon descent of the multipurpose cylinder piston 234 as in FIG. 11, with the consequent engagement of the positioning pin 242 in the bore 246 in one of the chuck slides 54 and the depression of the associated unlocking pin 82 by the push pin 244, the positioning pawl 264 becomes received in one of the notches 266. The jaw magazine 34 is thus positioned with the desired holder groove 140 therein held exactly in line with the guide groove 226 in the jaw guide 38 and with that one of the radial guideways 56 in the chuck body 30 which is in the jaw change position.

Pneumatic Cleaning System

The pneumatic cleaning system 48 appears in FIGS. 1, 2, 4 and 5. It includes a conduit system 274 for the conveyance of air under pressure. The conduit system 274 includes a pair of conduits 276 (FIGS. 4 and 5) fitted in oblique bores 278 in the opposed side walls of the jaw guide 38. Sloping downwardly as they extend through the jaw guide walls toward each other, these conduits 276 terminate in air outlets 280 open to the guide groove 226. When the jaw change assembly 40 is in the working position as in FIG. 2, the air outlets 280 expel forced airstreams directed toward the upper end portions of the opposed side walls of that one of the radial guideways 56 in the chuck body 30 which is in the jaw change position, as will be best understood from FIG. 4.

The conduit system 274 includes another conduit 282 on the lower end of the front cover 227 of the support frame 156. The conduit 282 has an air outlet 284 oriented, when the jaw change assembly 40 is in the working position, toward the front face of that gripping jaw 32 on the chuck body 30 which is in the jaw change position. Upon withdrawal of this gripping jaw from the chuck body 30, the forced airflow from the outlet 284 falls primarily upon the teeth 64 on the primary detent 62 of the jaw locking mechanism 60 in the jaw change position.

The above air outlets 280 and 284 constitute a group of air outlets of the conduit system 274 for cleaning the quick change chuck 28. These air outlets, however, may be replaced by a single air outlet capable of blowing pressurized air against the entire chuck body guideway 56 lying in the jaw change position.

Also included in the conduit system 274 is an upwardly sloping conduit 286 fitted in a bore 288 in one of the forward extensions 225 of the jaw guide 38. This conduit 286 has a terminal air outlet 290 directed toward the work holding end of that gripping jaw 32' on the jaw magazine 34 which has been brought into line with that one of the radial guideways 56 in the chuck body 30 which is in the jaw change position. The pressurized air expelled from the conduit 286 cleans at least the work holding end of the gripping jaw 32' preparatory to its transfer to the chuck body 30 by the jaw transfer mechanism 36.

The conduit system 274 further includes a conduit 292 extending through a support 294 on the body 232 of the multipurpose cylinder 50. The conduit 292 communicates with an air outlet 296 formed in the support 294 and directed forwardly therefrom. The forced airstream from this outlet 296 impinges on the teeth 66 of the gripping jaw 32 or 32' being transferred between chuck body 30 and jaw magazine 34 through the jaw guide 38.

The above two air outlets 290 and 296 are intended to clean those parts of the gripping jaws 32 and 32' which are particularly susceptible to chips and other foreign matter. Although the provision of the air outlet 296 in the illustrated position is recommended, the work holding ends of the gripping jaws may be cleaned by forced airflow from an outlet provided on the chuck 28.

The conduit system 274 communicates with a compressor or like source of pressurized air via suitable valving, both pressurized air source and valving being not shown because of their conventional nature. The unshown valve or valves are automatically opened during jaw change, or when the jaw change assembly 40 is in the working position of FIG. 2.

FIG. 2 shows a proximity detector 298 mounted on the bottom end of the front cover 227 for sensing the gripping jaw 32 indexed to the jaw change position. Another proximity detector is disposed at 300 on the support 294 for sensing that gripping jaw 32' on the jaw magazine 34 which has been brought into line with that one of the radial guideways 56 in the chuck body 30 which is in the jaw change position.

## Operation

The chuck jaw changer 20 of the above construction automatically changes the set of gripping jaws 32 now shown installed on the chuck body 30 with any of the other sets of gripping jaws 32' on the jaw magazine 34 in the following manner.

It will be assumed that the N/C lathe 22 is now in the state of FIG. 1, with the jaw change assembly 40 held in the retracted position. As the unshown "director" puts out a jaw change signal, as for a change in the size of work to be held by the chuck 28, the work spindle 26 comes to a stop in one of the predetermined angular positions where one of the gripping jaws 32 lies in the jaw change position as in FIG. 1. This gripping jaw 32 in the jaw change position is first withdrawn from the chuck body 30. Then the wedge member 76 of the chuck 28 is thrusted forwardly for wedging all three gripping jaws 32 radially outwardly of the chuck body 30 via the slides 54 in engagement therewith to their positions for unchucking the work.

Now the jaw change assembly 40 must be moved from the retracted position of FIG. 1 to the working position of FIG. 2. To this end the longitudinal cylinder 90 is first extended to move the jaw change assembly 40 from the rear to the front position by the sliding motion of the carriage 86 along the guide 88. Then the radial cylinder 102 is contracted to move the jaw change assembly 40 from the upper to the lower position by the sliding motion of the magazine spindle 128 down the radial cylinder body 104. The extension of the longitudinal cylinder 90 and the contraction of the radial cylinder 102 are both terminated by mechanical means to bring the jaw change assembly 40 to the exact working position required.

It is assumed that the jaw magazine 34 has been turned by the magazine motor 152 to move one of its empty holder grooves 140 to the prescribed angular position thereon for the reception of the first gripping jaw 32 from the chuck 28. Accordingly, when the jaw change assembly 40 reaches the working position, that empty holder groove 140 in the jaw magazine comes into line with the first gripping jaw 32 on the chuck body 30 which is in the jaw change position. It is apparent that the jaw magazine 34 may be turned to align one of its empty holder grooves 140 with one of the radial guideways 56 in the chuck body 30 after the jaw change assembly 40 has traveled to the working position.

Further, when the jaw change assembly 40 comes to the working position, the jaw guide 38 becomes interposed between chuck body 30 and jaw magazine 34. The guide groove 226 in the jaw guide is aligned with one of the guideways 56 in the chuck body 30 and one of the holder grooves 140 in the jaw magazine 34, providing a substantially continuous, rectilinear guide track for the gripping jaws to be subsequently transferred therebetween.

The pneumatic cleaning system 48 starts its operation as the jaw change assembly 40 comes to the working position as described above. Receiving pressurized air from its unshown source, the conduit system 274 expels the air out of its outlets 280, 284, 290 and 296. The airstreams coming out of the outlets 280 and 284 fall, at this time, on the side and front surfaces of that gripping jaw 32 on the chuck body 30 which is in the jaw change position, blowing away chips and other dirt therefrom. The airstreams from the outlets 290 and 296 serve no useful purpose at this moment.

As desired, however, the pneumatic cleaning system 48 may be set into operation after the withdrawal of the first gripping jaw 32 from the chuck body 30. As a further alternative its conduits 276, 282, 286 and 292 may be made communicative with the pressurized air source via respective valves to be opened and closed at different moments of time.

Upon arrival of the jaw change assembly 40 at the working position the transfer cylinder 178 of the jaw transfer mechanism 36 is extended to lower the hook assembly 186 toward the chuck 28. The multipurpose cylinder 50 is in a state wherein its piston 234 is still raised, with its piston rods 236 and 238 held out of engagement with the chuck 28 and jaw magazine 34. Further, as the multipurpose cylinder piston 234 lies in the raised position, the hook actuator 216 is held projecting forwardly to its working position in the channel 228 defined by the jaw guide 38, as drawn in FIG. 2 in particular.

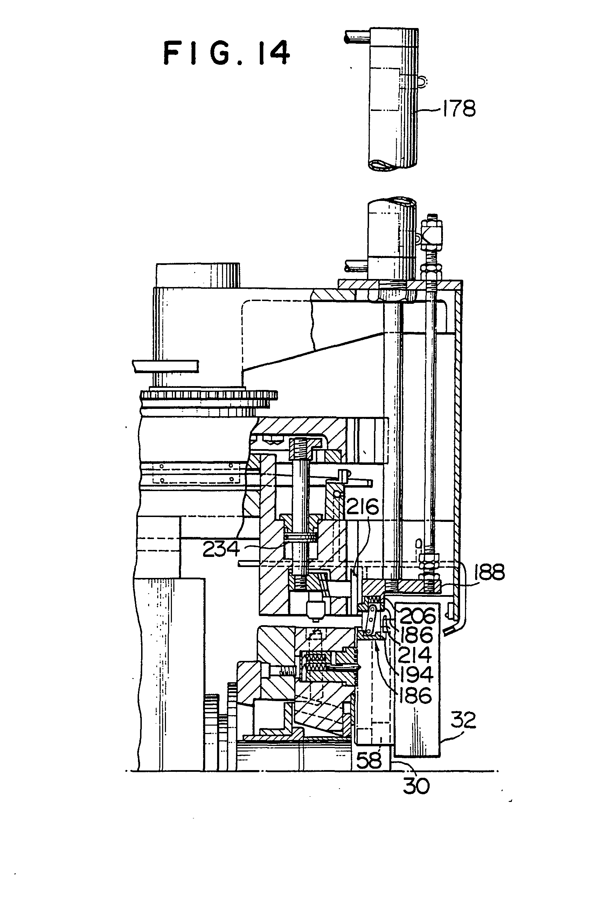

FIG. 14 shows the hook assembly 186 fully lowered by the transfer cylinder 178 into abutment against the shoe 58 of the gripping jaw 32 in the jaw change position on the chuck body 30. Toward the end of this descent of the hook assembly 186, its release button 196 strikes the hook actuator 216, which is being held in its working position as described above and is thereby caused to travel forwardly of the hook carrier 188 against the bias of the compression spring 206. The forward travel of the release button 196 results in the retraction of the hook 194 into the hook carrier 188, so that the hook assembly 186 can reach the lowermost position without being obstructed by the overhang 214 of the gripping jaw 32. In this lowermost position of the hook assembly 186 the hook 194 is held retracted into the hook carrier 188 as long as the multipurpose cylinder piston 234 is held raised as in FIG. 14.

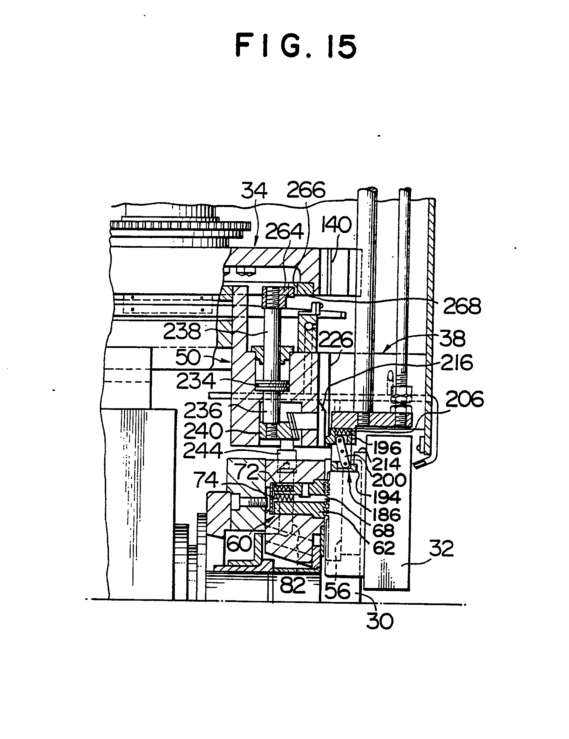

Next comes the step of lowering the multipurpose cylinder piston 234. FIG. 15 depicts the results. The pin carrier 240 on the first piston rod 236 of the multipurpose cylinder wedges the hook actuator 216 to its retracted position. Thereupon the hook 194 travels forwardly into engagement with the overhang 214 of the first gripping jaw 32 under the force of the compression spring 206 transmitted through the release button 196 and lever 200. The hook assembly 186 is now ready to carry the first gripping jaw 32 upwardly from chuck body 30 to jaw magazine 34.

The descent of the multipurpose cylinder piston 234 also results in the depression of the unlocking pin 82 of the jaw locking mechanism 60 by the push pin 244, as best pictured in FIG. 11. Upon depression of the unlocking pin 82, the primary detent 62 of the locking mechanism travels rearwardly against the bias of the compression springs 72, out of toothed engagement with the first gripping jaw 32, as in FIG. 15. The radial position of the gripping jaw 32 on the chuck body 30 remains unchanged upon disengagement of the primary detent 62 therefrom because the secondary detent 68 is still urged into engagement with its teeth 66 under the force of the compression spring 74. The force of this spring is so weak, however, that the gripping jaw can be pulled out of the radial guideway 56 in the chuck body 30 upon subsequent contraction of the transfer cylinder 178.

Furthermore, upon descent of the multipurpose cylinder piston 234, the positioning pin 242 on its first piston rod 236 becomes received in the bore 246 in the chuck slide 54 as in FIG. 11. Thus the chuck body 30 is positioned relative to the jaw guide 38 with the radial guideway 56 in the former exactly aligned with the guide groove 226 in the latter.

Still further, the positioning pawl 264 on the second piston rod 238 of the multipurpose cylinder 50 becomes received in one of the notches 266 in the ring 268 secured to the jaw magazine 34. The jaw magazine 34 is therefore also positioned with respect to the jaw guide 38 with one of its empty holder grooves 140 precisely aligned with the guide groove 226 in the jaw guide. It is thus seen that one of the radial guideways 56 in the chuck body 30, the guide groove 226 in the jaw guide 38, and one of the empty holder grooves 140 in the jaw magazine 34 have now been aligned with the highest possible degree of accuracy.

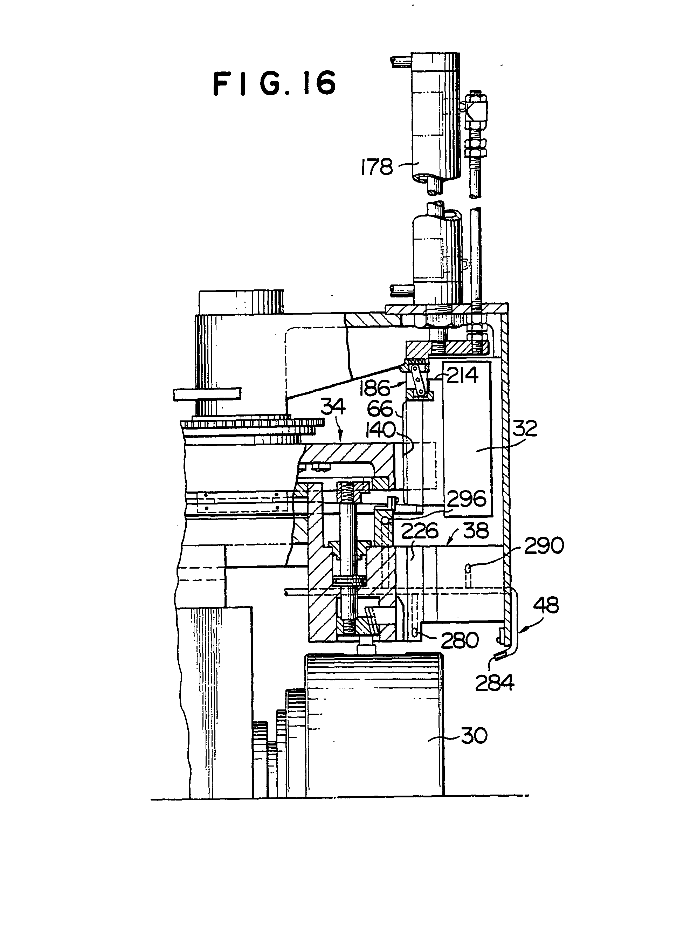

Then the transfer cylinder 178 is contracted as in FIG. 16 to raise the hook assembly 186 together with the first gripping jaw 32 engaged therewith. After being withdrawn from the radial guideway in the chuck body 30, the gripping jaw 32 travels upwardly through the guide groove 226 in the jaw guide 38 and, by being so guided, smoothly enters the holder groove 140 in the jaw magazine 34. Although received in the holder groove 140 in the state of FIG. 16, the first gripping jaw 32 must still be supported by the transfer cylinder 178 via the hook assembly 186 on its piston rod 182, because the annular jaw rest 168 is cut away under the first gripping jaw.

Upon withdrawal of the first gripping jaw 32 from the radial guideway 56 in the chuck body 30, the airstreams being expelled from the pair of opposed outlets 280 of the pneumatic cleaning system 48 strike the opposed side walls of the radial guideway thereby cleaning these guiding surfaces. The airstream from the outlet 284 falls directly upon the teeth 64 of the primary detent 62 to make them free of dirt. Positioned just in front of, and very close to, the primary detent teeth 64, the outlet 284 makes possible the application of an intense flow of pressurized air thereto for complete removal of chips and the like from the grooves between these teeth.

Further the airstream from the outlet 296 cleans the teeth 66 of the first gripping jaw 32 being transferred from chuck body 30 to jaw magazine 34. The position of this air outlet 296 is also well calculated for complete removal of solids from the grooves between the jaw teeth. Furthermore, after the jaw has been transferred to the jaw magazine 34, the airstream from the outlet 290 cleans the work holding end of the jaw.

It is particularly noteworthy in respect to the pneumatic cleaning system 48 that a total of three air outlets, the pair of opposed ones 280 and the additional one 284, are provided for cleaning each radial guideway 56 in the chuck body 30. As the airstream from the outlet 284 removes dirt from the grooves between the primary detent teeth 64, the two angled, intersecting airstreams from the pair of outlets 280 carry the dirt away from the chuck body guideway 56, thus effectively cleaning the same for the insertion of the next gripping jaw.

Then the multipurpose cylinder piston 234 is raised as in FIG. 10. The push pin 244 on the first piston rod 236 of the multipurpose cylinder 50 releases the unlocking pin 82, whereas the positioning pin 242, also on the first piston rod, withdraws from the bore 246 in the chuck slide 54. Thus released, the unlocking pin 82 allows the primary detent 62 to travel axially forwardly of the chuck 28 under the bias of the compression springs 72. The unlocking pin 82 itself is forced radially outwardly of the chuck 28 by such forward travel of the primary detent 62. This return of the unlocking pin 82 to the FIG. 10 position is sensed by the proximity detector 250, which then causes the chuck 28 to be revolved until the second gripping jaw 32 thereon comes to the jaw change position.

When the multipurpose cylinder piston 234 is raised as described above, the positioning pawl 272 thereon moves out of one of the notches 266 in the jaw magazine 34. Then the magazine motor 152 is set into rotation to revolve the jaw magazine 34 through an angle required to bring another empty holder groove 140 therein into alignment with the second gripping jaw 32 on the chuck body 30. With this revolution of the jaw magazine 34, the first gripping jaw 32 which has been transferred thereto becomes disengaged from the hook assembly 186 and rides onto either of the slopes 176 (FIGS. 6 and 7) of the top edge 174 of the jaw rest 168. Thereafter the gripping jaw slides over the jaw rest 168 with the revolution of the jaw magazine 34.

Now the chuck jaw changer 20 has returned to the state of FIG. 2. Then the second, and then the third, gripping jaws 32 are transferred from chuck body 30 to jaw magazine 34 by the repetition of the foregoing procedure.

The multipurpose cylinder piston 234 is raised following the transfer of the complete set of gripping jaws 32 from chuck body 30 to jaw magazine 34. Upon subsequent detection of the unlocking pin 82 by the proximity detector 250, the chuck body 30 is turned until its radial guideway 56, from which the first gripping jaw 32 has been withdrawn, comes to the jaw change position. The jaw magazine 34 is also turned to bring the first of the desired new set of gripping jaws 32' into line with the chuck body guideway 56 lying in the jaw change position. Although the first new gripping jaw rides off the annular jaw rest 168 when so aligned with the chuck body guideway 56, it simultaneously comes into engagement with the hook assembly 186 and is thereby prevented from slipping down the jaw magazine holder groove 140.

As has been mentioned, the pneumatic cleaning system 48 is in constant operation during jaw change. Thus the airstream from the outlet 290 of the conduit system 274 now cleans the work holding end of the first new gripping jaw 32.

Then the multipurpose cylinder piston 234 is lowered as in FIG. 11. The push pin 244 on the first piston rod 236 of the multipurpose cylinder 50 depresses the underlying unlocking pin 82 thereby causing retraction of the corresponding primary detent 62 against the force of the compression springs 72. The positioning pin 242 becomes inserted in the bore 246 in the chuck slide 54 for positioning the chuck body 30 with respect to the jaw guide 38. The positioning pawl 264 on the second piston rod 238 of the multipurpose cylinder 50 becomes engaged in one of the notches 266 in the jaw magazine 34, so that the jaw magazine is also positioned with respect to the jaw guide 38.

Then the transfer cylinder 178 is extended to lower the first new gripping jaw 32', in engagement with the hook assembly 186 on its piston rod 182, from jaw magazine 34 to chuck body 30. Pushed out of the jaw magazine holder groove 140 by the transfer cylinder 178, the first new gripping jaw 32' slides into the jaw guide groove 226 and thence, by being guided thereby, into the chuck body guideway 56.

Attention is called to the fact that the jaw guide 38 is now rigidly coupled to both chuck body 30 and jaw magazine 34, with its guide groove 226 held precisely in line with the chuck body guideway 56 and jaw magazine holder groove 140. Accordingly, the gripping jaw can travel smoothly from jaw magazine to chuck body along the substantially continuous, rectilinear guide track offered by the jaw guide 38. This holds true, of course, even if the jaw magazine has not been machined to the closest possible tolerances and is itself incapable of bringing the gripping jaw into exact alignment with the chuck body guideway 56 in the jaw change position.

The multipurpose cylinder piston 234 is held lowered during the above transfer of the first new gripping jaw 32' from jaw magazine 34 to chuck body 30. The hook actuator 216 is therefore held retracted, allowing the hook assembly 186 to travel therepast without interfering with its release button 196. The hook 194 of the hook assembly 186 remains in engagement with the overhang 214 of the first new gripping jaw 32' until the latter becomes fully inserted in the chuck body guideway 56.

Further, during the above descent of the first new gripping jaw 32' from jaw magazine 34 to chuck body 30, the airstream from the outlet 296 recleans its teeth 66. The shoe 58 of the jaw and the chuck body guideway 56 have also been cleaned pneumatically by the time the former enters the latter, so that no foreign matter will be present to obstruct or retard the admission of the jaw shoe in the chuck body guideway.

Then the multipurpose cylinder piston 234 is raised. The positioning pin 242 and push pin 244 on the first piston rod 236 of the multipurpose cylinder 50 move out of the bore 246 in the chuck slide 54 and out of engagement with the unlocking pin 82 respectively. The positioning pawl 264 on the second piston rod 238 of the multipurpose cylinder 50 also moves out of one of the notches 266 in the jaw magazine 34.

As the push pin 244 releases the unlocking pin 82 as described above, the primary detent 62 of the jaw locking mechanism 60 will move axially forwardly of the chuck 28 into toothed engagement with the first new gripping jaw 32' in the chuck body guideway 56 under the force of the compression springs 72. Since the primary detent teeth 64 and jaw teeth 66 have both been cleaned pneumatically, they will normally interengage correctly, with the consequent movement of the unlocking pin 82 radially outwardly of the chuck 28 to the FIG. 10 position for detection by the proximity detector 250. However, should the primary detent teeth 64 and jaw teeth 66 fail to make proper interengagement by some accident, the unlocking pin 82 will not fully return to the FIG. 10 position. The proximity detector 250 will then be unable to detect the unlocking pin 82, from which fact there can be ascertained the failure of the locking mechanism 60 to lock the first new gripping jaw 32 on the chuck body 30.

The above ascent of the multipurpose cylinder piston 234 also results in the forward travel of the hook actuator 216 relative to the jaw guide 38. The hook actuator 216 pushes the release button 196 of the hook assembly 186 into the hook carrier 188 against the force of the compression spring 206. The result is the retraction of the hook 194 out of engagement with the overhang 214 of the first new gripping jaw 32'.

Then the transfer cylinder 178 is contracted to carry the unloaded hook assembly 186 back to the FIG. 2 position.

Thereafter the chuck body 30 is turned to bring to the jaw change position the radial guideway 56 from which the second old gripping jaw 32 has been withdrawn. The jaw magazine 34 is also turned by the magazine motor 152 until the second new gripping jaw 32' comes into line with the second chuck body guideway 56 in the jaw change position. The hook assembly 186 engages the second new gripping jaw 32' so positioned, keeping the same from falling down through the cut in the annular jaw rest 168.

Then the second new gripping jaw 32' is transferred to and locked in the second chuck body guideway 56 through the foregoing procedure. The third new gripping jaw 32' is likewise transferred to and locked in the third chuck body guideway 56.

Upon completion of the mounting of the desired new set of gripping jaws 32' on the chuck body 30, the piston 234 of the multipurpose cylinder 50 is raised, and the transfer cylinder 178 is contracted, both as depicted in FIG. 2. Further the jaw magazine 34 is revolved by the magazine motor 152 to bring under the raised hook assembly 186 that empty holder groove 140 therein from which the first new gripping jaw 32' has been withdrawn. This revolution of the jaw magazine 34 is intended to make it ready for the next jaw change. The unshown valve or valves of the pneumatic cleaning system 48 may now be closed to discontinue the production of airstreams from the various air outlets of the conduit system 274.

The complete jaw change assembly 40 must then be moved from the working position of FIG. 2 back to the retracted position of FIG. 1 for the resumption of machining by the N/C lathe 22 with the use of the newly installed set of gripping jaws 32'. The radial cylinder 102 is first extended to move the jaw change assembly 40 upwardly or radially outwardly of the chuck 28. Then the longitudinal cylinder 90 is contracted to cause rearward travel of the carriage 86 together with the jaw change assembly 40 mounted thereon. Thus the change of the old set of gripping jaws 32 with the new set 32' has been completed.

In the foregoing description of operation, the new set of gripping jaws 32' were transferred one after another to the chuck body 30 after the complete withdrawal of the old set of gripping jaws 32 therefrom. As will be understood, however, each new gripping jaw could be transferred to the chuck body immediately following the withdrawal of one old gripping jaw therefrom.

Second Form

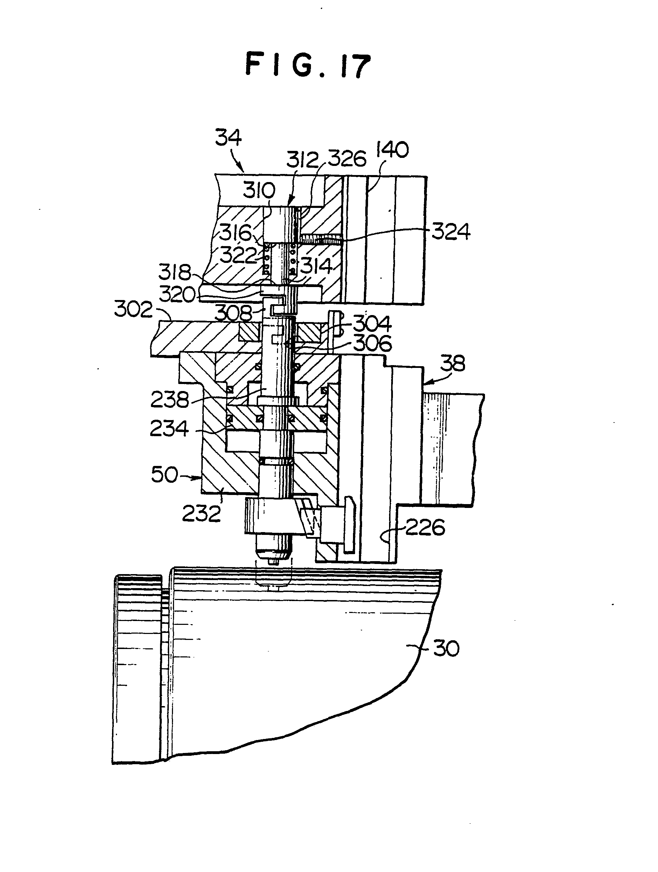

Shown in FIG. 17 are alternative means for positioning the jaw magazine 34 with one of its holder grooves 140 held exactly in line with the guide groove 226 in the jaw guide 38 and with one of the radial guideways, not seen in this figure, in the chuck body 30. In this alternative embodiment, the body 232 of the multipurpose cylinder 50 (of the double acting, double ended rod design as in the preceding embodiment) is secured to the underside of a mounting flange 302 which corresponds to, but is greater in radius than, the mounting flange 166 of the first described embodiment. The mounting flange 302 is of course mounted on the bottom end of the magazine spindle 128 for up and down motion therewith relative to the carriage 86.

Firmly embedded in the mounting flange 302 is a positioning ring 304 defining a positioning hole 306. The second piston rod 238 of the multipurpose cylinder 50 extends upwardly through the positioning hole 306 and terminates in an L-shaped hook 308. This hook 308 is movable into and out of the positioning hole 306 with the reciprocation of the multipurpose cylinder piston 234.

The jaw magazine 34 has formed therein a plurality of stepped bores, one seen at 310, in the same angular positions as those of the holder grooves 140 cut therein. The stepped bores 310 extend parallel to the axis of rotation of the jaw magazine 34 and are so arranged thereon that each bore comes into exact axial alignment with the positioning hole 306 in the mounting flange 302 when the corresponding one of the holder grooves 140 is moved into line with the jaw guide groove 226.

Each stepped bore slidably receives a positioning pin 312 having a midportion 314 of reduced diameter providing a pair of opposed shoulders 316 and 318. The bottom end of the positioning pin 312, projecting downwardly of the jaw magazine 34, is shaped into a hook 320 movable into and out of engagement with the hook 308 of the multipurpose cylinder piston rod 238 with the rotation of the jaw magazine. The hooks 308 and 320 are so shaped in relation to each other than once they are interengaged as shown in FIG. 17, the multipurpose cylinder piston rod 238 and positioning pin 312 are locked against longitudinal displacement with respect to each other. Sleeved upon the reduced diameter midport 314 of the positioning pin 312, a compression spring 322 acts between the jaw magazine 34 and the positioning pin upper shoulder 316 to urge the positioning pin upwardly. The lower shoulder 318 of the positioning pin 312 normally butts against the bottom surface of the jaw magazine 34 to limit its upward displacement. A headless screw key 324 is driven into the jaw magazine 34 for sliding engagement in a longitudinal keyway 326 in the positioning pin 312, so that the latter is held against rotation relative to the jaw magazine.

In operation the multipurpose cylinder piston 234 is held raised during the rotation of the jaw magazine 34, as is apparent from the foregoing description of the FIGS. 1 through 16 embodiment. When any of the holder grooves 140 in the jaw magazine 34 is positioned for jaw transfer to or from the chuck body 30, the hook 320 of the corresponding positioning pin 312 comes into engagement with the hook 308 of the multipurpose cylinder piston rod 238. Upon subsequent descent of the multipurpose cylinder piston 234, its piston rod 238 pulls the positioning pin 312 into the positioning hole 306 in the mounting flange 302 against the force of the compression spring 322. The jaw magazine 34 is thus positioned with respect to the jaw guide 38, with its holder groove 140 held exactly in line with the jaw guide groove 226 and, therefore, with that one of the chuck body guideways which is in the jaw change position. Of course, upon subsequent ascent of the multipurpose cylinder piston 234, the hook 308 of its piston rod 238 becomes ready to disengage from the hook 320 of the positioning pin 312 to allow the rotation of the jaw magazine 34.

Third Form

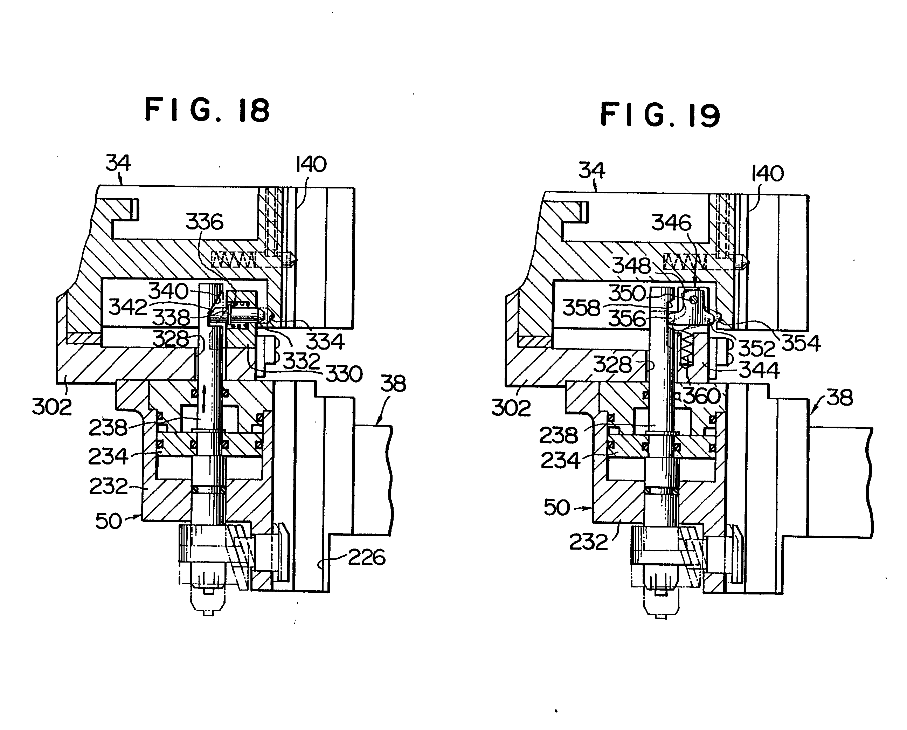

FIG. 18 shows further alternative means for positioning the jaw magazine 34 with respect to the jaw guide 38. As in the embodiment shown in FIG. 17, the body 232 of the multipurpose cylinder 50 is secured to the underside of the mounting flange 302 on the bottom end of the magazine spindle. The second piston rod 238 of the multipurpose cylinder extends upwardly through a clearance hole 328 in the mounting flange 302.

The mounting flange 302 has a lug 330 fixedly mounted in a peripheral position thereon. A positioning pin 332 is slidably mounted relative to the lug 330 for reciprocating movement in a radial direction of the jaw magazine 34. The positioning pin 332 is movable into and out of engagement in any of a series of circumferentially spaced apart recesses 334 cut in the depending outer rim of the jaw magazine 34. The angular positions of these recesses 334 on the jaw magazine 34 correspond exactly to those of the holder grooves 140 therein. A compression spring 336 acts between the lug 330 and a collar 338 on the positioning pin 332 to normally hold the latter out of engagement in the recesses 334.

The top end of the multipurpose cylinder piston rod 238, disposed radially inwardly of the positioning pin 332 with respect to the jaw guide 34, is recessed to provide a cam surface 340 for acting on a sloping rear end 342 of the positioning pin 332.

When the multipurpose cylinder piston 234 is raised as drawn, the sloping rear end 342 of the positioning pin 332 is seated in the deepest part of the recessed cam surface 340 of the piston rod 238 under the influence of the compression spring 336. The jaw magazine 34 is therefore free to rotate. Upon descent of the multipurpose cylinder piston 234 following the rotation of the jaw magazine 34, the cam surface 340 of its piston rod 238 pushes the positioning pin 332 radially outwardly of the jaw magazine against the force of the compression spring 336 into engagement in one of the recesses 334. The desired one of the holder grooves 140 in the jaw magazine 34 is thus positioned in exact alignment with the jaw guide groove 226 and, as a consequence, with that one of the radial guideways in the chuck body which is in the jaw change position.

Fourth Form

In FIG. 19 are shown still further alternative means for positioning the jaw magazine 34 with respect to the jaw guide 38. As in the two preceding embodiment, the body 232 of the multipurpose cylinder 50 is secured to the underside of the mounting flange 302 on the bottom end of the magazine spindle, with its second piston rod 238 extending upwardly through the clearance hole 328.

The mounting flange 302 is shown to have an integral lug 344 in a peripheral position thereon. A positioning member 346 substantially in the shape of an inverted T has a vertical limb 348 pinned at 350 to the lug 344 for pivotal motion about an axis at right angles with the radial direction of the jaw magazine 34. A first limb 352 of the two opposite horizontal limbs of the positioning member 346 is adapted for movement into and out of a series of angularly spaced apart recesses 354 in the depending outer rim of the jaw magazine 34. Like the recesses 334 of the embodiment illustrated in FIG. 18, the recesses 354 have angular positions on the jaw magazine 34 corresponding to those of the holder grooves 140 therein.

The second horizontal limb 356 of the positioning member 346 serves as a cam follower to be acted upon by a recessed cam surface 358 of the multipurpose cylinder piston rod 238. A compression spring 360 acts between the mounting flange 302 and the second horizontal limb 356 of the positioning member 346.

Thus, when the multipurpose cylinder piston 234 is held raised as in this drawing, the compression spring 360 keeps the second horizontal limb 356 of the positioning member 346 seated in the deepest part of the cam surface 358 of the multipurpose cylinder piston rod 238, thereby holding the first horizontal limb 352 out of engagement in the recesses 354 in the jaw magazine 34. Upon descent of the multipurpose cylinder piston 234, the cam surface 358 of its piston rod 238 pivots the positioning member 346 in the counterclockwise direction, as viewed in this figure, against the bias of the compression spring 360, with the result that its first horizontal limb 352 becomes engaged in one of the recesses 354 in the jaw magazine 34. Now the desired one of the holder grooves 140 in the jaw magazine 34 is correctly aligned with the jaw guide groove 226 and with that one of the radial guideways in the chuck body which is in the jaw change position.

Possible Modifications

A variety of modifications or variations of the above disclosed embodiments of the invention will occur to one skilled in the art to conform to the requirements of the intended applications of the chuck jaw changer or to design preferences, without departing from the scope of the present invention. The illustrated quick change chuck 28, in particular, represents but one of the many possible chuck constructions suitable for use with the chuck jaw changer of this invention. The following is a brief list of such possible modifications or variations of the chuck jaw changer 20 including the chuck 28:

1. Each gripping jaw 32 or 32' may make direct toothed engagement with the corresponding chuck slide 54, instead of with the detent 62, with the slide made movable axially of the chuck for locking and unlocking the jaw as by a fluid actuated cylinder mounted on the back of the work spindle.

2. The set of gripping jaws 32 or 32' on the chuck body 30 may be locked and unlocked altogether.

3. Each gripping jaw may be unlocked by the pivotal motion, instead of linear motion as in the illustrated embodiments of the invention, of an unlocking member.

4. The turntable used as the jaw magazine 34 in the illustrated embodiment may be replaced by another rotatable jaw magazine in the form of an endless moving means carrying jaw holders, such as that used as a tool magazine.

5. Another possible example of jaw magazine is that having jaw holders arranged radially thereon, with its axis of rotation made angularly displaceable 90 degrees.

6. A fluid actuated cylinder or solenoid may be substituted for the hook assembly 186 on the piston rod of the transfer cylinder 178, and the piston rod of the additional cylinder or the plunger of the solenoid may be adapted for movement into and out of engagement with each gripping jaw.

7. The transfer cylinder 178 may itself be replaced by a motor driven rack, with the hook assembly 186 or equivalent means mounted thereon.

8. The gripping jaws 32 and 32' may be gripped, instead of being hooked as in the illustrated embodiments, during transfer between chuck body and jaw magazine.

9. The hook assembly 186 or equivalent means may be moved between chuck body and jaw magazine by a servomotor, digital cylinder, or like means capable of accurate positional control, in order to make possible the use of chucks of various diameters or to adjustably vary the positions of engagement of the gripping jaws with the chuck slides.

10. The jaw magazine may be provided with jaw holders pivotable 180 degrees thereon so that each set of gripping jaws may hold work of two different sizes.

11. The fluid actuated cylinder 50 may not be of the double ended rod construction but may have only one piston rod for positioning either of the chuck body 30 and jaw magazine 34 with respect to the jaw guide 38.

12. In the illustrated embodiment the radial transport mechanism 44 is intended to enable the jaw change assembly 40 to bypass the headstock 24 of the N/C lathe 22 on its way between the working and retracted positions. If circumstances permit, therefore, only the longitudinal transport mechanism 42 will serve the purpose of transporting the jaw change assembly 40 between the working and retracted positions.

**Claims**

1. A chuck jaw changer for attachment to a machine tool (22) having a work spindle (26), comprising:

(a) a chuck (28) having a chuck body (30) mountable on the work spindle (26) of the machine tool (22) and a set of gripping jaws (32) replaceably engaged in respective radial guideways (56) defined in the chuck body (30), each gripping jaw (32) being slidable into and out of one of the guideways (56) when that guideway (56) is in a preassigned jaw change position on the chuck body (30);

(b) an indexing jaw magazine (34) rotatably mounted in use on the machine tool (22) and having a plurality of holder portions (138) for releasably holding additional sets of gripping jaws (32') as well as the first recited set of gripping jaws (32) as the latter are withdrawn from the chuck body (30), the jaw magazine (34) being capable of bringing any of the holder portions (138), with or without a gripping jaw (32') thereon, into line with that one of the guideways (56) in the chuck body (30) which is in the jaw change position; and

(c) a jaw transfer mechanism (36) for transferring a gripping jaw (32; 32') rectilinearly between that one of the guideways (56) in the chuck body (30) which is in the jaw change position and that one of the holder portions (138) of the jaw magazine (34) which is positioned in line therewith, characterized by:

(d) a jaw change assembly (40) for attachment in use to a stationary portion of the machine tool (22) comprising the jaw magazine (34) and the jaw transfer mechanism (36) and being further provided with a longitudinal transport mechanism (42) for moving the jaw change assembly (40) in the longitudinal direction of the work spindle (26) relative to the same between a first position away from the chuck (28) and a second position close to the chuck (28); and

(e) a jaw guide (38), arranged as a part of the jaw change assembly (40) and between the jaw magazine (34) and the chuck body (30) when the jaw change assembly (40) is in its second position, for providing a substantially continuous, rectilinear guide track (140, 226, 56) between the jaw magazine (34) and the chuck body (30) for the transfer of a gripping jaw (32; 32') by the jaw transfer mechanism (36), whereby any desired gripping jaw (32; 32') can be accurately transferred from one of the holder portions (138) of the jaw magazine (34) into one of the guideways (56) in the chuck body (30) and vice versa.

2. The chuck jaw changer of claim 1 further comprising a positioning mechanism (46) for holding any of the guideways (56) in the chuck body (30) in the exact jaw change position by locking the chuck body against displacement relative to the jaw guide (38).

3. The chuck jaw changer of claim 1 further comprising a positioning mechanism (46) for holding any of the holder portions (138) of the jaw magazine (34) exactly in line with the jaw guide (38) by locking the jaw magazine against displacement relative to the jaw guide.

4. The chuck jaw changer of claim 1 further comprising a positioning mechanism (46) for holding any of the holder portions (138) of the jaw magazine (34) exactly in line with that one of the guideways (56) in the chuck body (30) which is held in the jaw change position, by locking both the jaw magazine and the chuck body against displacement relative to the jaw guide (38).

5. The chuck jaw changer of any one of the claim 1 to 4 wherein the chuck (28) further comprises:

(a) a plurality of slides (54) engaged respectively in a second set of radial guideways (52) defined in the chuck body (30) and disposed opposite the respective gripping jaws (32) engaged in the first recited set of radial guideways (56) in the chuck body;

(b) a locking mechanism (60) for locking each gripping jaw against displacement relative to the opposed one of the slides; and

(c) means (76) acting on the slides for moving the gripping jaws radially of the chuck body.

6. The chuck jaw changer of claim 5 further comprising an unlocking mechanism (84) for causing one of the locking mechanisms (60) of the chuck (28) to unlock the gripping jaw (32) engaged in that one of the first set of guideways (56) in the chuck body (30) which is held in the jaw change position.

7. The chuck jaw changer of claim 6 wherein the chuck (28) further comprises an unlocking member (82) to be activated for causing each locking mechanism (60) to unlock the corresponding gripping jaw (32), and wherein the unlocking mechanism (84) comprises a fluid actuated cylinder (50) for activating the unlocking members.

8. The chuck jaw changer of claim 7 further comprising a detector (250) for sensing the fact that, upon cessation of the activation of each unlocking member (82) by the fluid actuated cylinder ( 50), the corresponding locking mechanism (60) has locked the gripping jaw (32) engaged in that one of the first set of guideways (56) in the chuck body (30) which is held in the jaw change position.

9. The chuck jaw changer of claim 5 wherein the chuck (28) further comprises an unlocking member (82) to be activated for causing each locking mechanism (60) to unlock the corresponding gripping jaw (32), and wherein the chuck jaw changer further comprises:

(a) a fluid actuated cylinder (50) formed substantially integral with the jaw guide (38);

(b) a push pin (244) on a piston rod (236) of the fluid actuated cylinder for activating each unlocking member of the chuck; and

(c) a positioning pin (242) on the piston rod of the fluid actuated cylinder to be engaged in a bore (246) in each slide (54) of the chuck for holding any of the first set of guideways (56) in the chuck body (30) in the exact jaw change position with respect to the jaw guide.

10. The chuck jaw changer of claim 9 wherein the fluid actuated cylinder (50) is a double ended rod cylinder including a second piston rod (238) adapted to position the jaw magazine (34) with any desired one of the holder portions (138) thereof held exactly in line with that one of the first set of guideways (56) in the chuck body (30) which is in the jaw change position, by locking the jaw magazine against displacement relative to the jaw guide (38).

11. The chuck jaw changer of claim 10 wherein the second piston rod (238) of the double ended rod cylinder (50) positions the jaw magazine (34) by means comprising:

(a) a positioning pawl (264) at the end of the second piston rod; and

(b) means defining a plurality of notches (266) in angularly spaced apart positions on the jaw magazine;

(c) the positioning pawl being movable into and out of engagement in any of the notches with the operation of the double ended rod cylinder.

12. The chuck jaw changer of claim 10 wherein the second piston rod (238) of the double ended rod cylinder (50) positions the jaw magazine (34) by means comprising:

(a) a nonrotatable mounting part (302) having formed therein a positioning hole (306) through which extends the second piston rod (238) of the double ended rod cylinder;

(b) a hook (308) at the end of the second piston rod which is movable into and out of the positioning hole in the mounting part;

(c) a plurality of positioning members (312) slidably mounted on the jaw magazine in angularly spaced apart positions thereon for movement toward and away from the double ended rod cylinder; and

(d) resilient means (322) biasing each positioning member away from the double ended rod cylinder;

(e) the hook of the second piston rod being engageable with one of the positioning members when any of the holder portions of the jaw magazine is brought into line with that one of the first set of guideways (56) in the chuck body (30) which is in the jaw change position, the second piston rod subsequently pulling the engaged positioning member into the positioning hole against the bias of the resilient means.

13. The chuck jaw changer of claim 10 wherein the second piston rod (238) of the double ended rod cylinder (50) positions the jaw magazine (34) by means comprising:

(a) a positioning pin (332) slidably supported by a nonrotatable part (330);

(b) there being a plurality of angularly spaced apart recesses (334) in the jaw magazine, the positioning pin being movable into and out of engagement in any of the recesses in the jaw magazine;

(c) resilient means (336) normally holding the positioning pin out of engagement in the recesses in the jaw magazine; and

(d) cam means (340) on the second piston rod of the double ended rod cylinder for moving the positioning pin into engagement in one of the recesses in the jaw magazine against the force of the resilient means when any of the holder portions (138) of the jaw magazine is brought into line with that one of the first set of guideways (56) in the chuck body (30) which is in the jaw change position.

14. The chuck jaw changer of claim 10 wherein the second piston rod (238) of the double ended rod cylinder (50) positions the jaw magazine (34) by means comprising:

(a) a positioning member (346) pivotally mounted on a nonrotatable part (344);

(b) there being a plurality of angularly spaced apart recesses (354) in the jaw magazine, the positioning member being pivotable into and out of engagement in any of the recesses in the jaw magazine;

(c) resilient means (360) normally holding the positioning member out of engagement in the recesses in the jaw magazine; and

(d) cam means (358) on the second piston rod of the double ended rod cylinder for pivoting the positioning member into engagement in one of the recesses in the jaw magazine against the force of the resilient means when any of the holder portions (138) of the jaw magazine is brought into line with that one of the first set of guideways (56) in the chuck body (30) which is in the jaw change position.

15. The chuck jaw changer of any one of the claims 1 to 14 wherein the jaw transfer mechanism (36) comprises:

(a) a hook assembly (186) capable of releasably engaging the gripping jaws (32, 32') for transferring the same between the chuck body (30) and the jaw magazine (34);

(b) means (178) for moving the hook assembly between the chuck body and the jaw magazine; and

(c) a retractable hook actuator (216) disposed on the rectilinear guide track between the chuck body and the jaw magazine for causing the hook assembly to engage and disengage a gripping jaw on the chuck body.

16. The chuck jaw changer of claim 15 wherein the hook actuator (216) is disposed in the jaw guide (38).

17. The chuck jaw changer of claim 16 wherein the hook actuator (216) is operatively coupled to the piston rod (236) of the fluid actuated cylinder (50) so as to be thereby moved into and out of engagement with the hook assembly (186).

18. The chuck jaw changer of any one of the claims 15 to 17 wherein the hook assembly (186) of the jaw transfer mechanism (36) comprises:

(a) a hook carrier (188) coupled to the moving means (178) thereby to be moved between the chuck body (30) and the jaw magazine (34);

(b) a hook (194) mounted to the hook carrier for sliding movement between a first position for engagement with the gripping jaws (32, 32') and a second position for disengagement therefrom;

(c) resilient means (206) on the hook carrier normally holding the hook in the first position; and

(d) a release button (196) also mounted to the hook carrier and operatively coupled to the hook for moving the same between the first and second positions, the release button moving the hook from the first to the second position against the force of the resilient means when moved into engagement with the retractable hook actuator (216).

19. The chuck jaw changer of any one of the claims 1 to 18 wherein the holder portions (138) of the jaw magazine (34) are in the form of grooves (140) defined at circumferential spacings in the jaw magazine for slidably receiving the respective gripping jaws (32, 32') therein, and wherein an annular jaw rest (168) is supported under the jaw magazine for holding thereon the gripping jaws received in the grooves in the jaw magazine.

20. The chuck jaw changer of claim 19 wherein the jaw rest (168) is nonrotatable relative to the machine tool and is partly cut off (172) for the passage of the gripping jaws (32, 32') being transferred between the chuck body (30) and the jaw magazine (34).

21. The chuck jaw changer of claim 20 wherein the top edge (174) of the jaw rest (168), slidably holding the gripping jaws (32') thereon, slopes downwardly (176) as it extends toward the opposite extremities of the jaw rest bounding the part where it is cut off.

22. The chuck jaw changer of any one of the claims 19 to 21 wherein the jaw transfer mechanism (36) comprises a hook assembly (186) capable of engaging and holding the gripping jaw (32) received in that one of the grooves (140) in the jaw magazine (34) which has been brought into line with that one of the guideways (56) in the chuck body (30) which is in the jaw change position.

23. The chuck jaw changer of any one of the claims 1 to 22 wherein the longitudinal transport mechanism (42) comprises:

(a) a carriage (86) movable on the machine tool (22) between the first and second positions, the carriage having the jaw magazine (34) rotatably mounted thereon and having the jaw transfer mechanism (36) and the jaw guide (38) nonrotatably mounted thereon; and

(b) an actuator (90) on the machine tool for moving the carriage between the first and second positions.

24. The chuck jaw changer of claim 23 further comprising a radial transport mechanism (44) on the carriage (86) of the longitudinal transport mechanism (42) for jointly moving the jaw magazine (34) and the jaw transfer mechanism (36) and the jaw guide (38) in a radial direction of the work spindle (26) of the machine tool (22) relative to the carriage, the jaw magazine and the jaw transfer mechanism and the jaw guide being moved, when the carriage is in the second position, toward the chuck (28) for jaw change and away from the chuck upon completion of the jaw change.

25. The chuck jaw changer of claim 24 wherein the radial transport mechanism (44) comprises:

(a) a fluid actuated cylinder (102) on the carriage (86) extending in a radial direction of the work spindle (26) of the machine tool; and

(b) a hollow magazine spindle (128) fitted over the cylinder and constrained to axial sliding motion relative to the same, the magazine spindle being coupled to a piston rod (112) of the cylinder thereby to be reciprocably moved radially of the work spindle;

(c) the magazine spindle having the jaw magazine (34) rotatably mounted thereon and having the jaw transfer mechanism (36) and the jaw guide (38) nonrotatably mounted thereon.

26. The chuck jaw changer of any one of the claims 1 to 25 further comprising a pneumatic cleaning system (48) for cleaning at least the chuck (28) and the gripping jaws (32, 32').

27. The chuck jaw changer of claim 26 wherein the pneumatic cleaning system (48) comprises an air conduit system (274) having:

(a) first air outlet means (280, 284) for expelling pressurized air directed toward the chuck (28);

(b) second air outlet means (290) for expelling pressurized air directed toward the gripping jaw (32') on the jaw magazine (34) which is to be transferred to the chuck body (30); and

(c) third air outlet means (296) for expelling pressurized air directed toward the gripping jaw (32, 32') being transferred between the chuck body and the jaw magazine.

**Patentansprüche**

1. Spannbackenwechsler zur Anbringung an einer Werkzeugmaschine (22) mit einer Arbeitsspindel (26), mit:

(a) einem Spannfutter (28), das einen an der Arbeitsspindel (26) der Werkzeugmaschine (22) montierbaren Spannfutterkörper (30) sowie einen Satz Greifbacken (32) aufweist, die in jeweilige, in dem Spannbackenkörper (30) definierte, radiale Führungen (56) in austauschbarer Weise eingreifen, wobei jede Greifbacke (32) in eine der Führungen (56) hinein sowie aus dieser heraus schiebbar ist, wenn sich diese Führung (56) in einer vorbestimmten Backenwechsel position an dem Spannfutterkörper (30) befindet;

(b) einem fortschaltbaren Backenmagazin (34), das im Gebrauch an der Werkzeugmaschine (22) drehbar montiert ist und eine Mehrzahl von Halterbereichen (138) zum lösbaren Halten weiterer Sätze von Greifbacken (32') sowie auch des erstgenannten Satzes von Greifbacken (32) aufweist, wenn letztere von dem Spannfutterkörper (30) abgenommen werden, wobei das Backenmagazin (34) in der Lage ist, einen jeden der Halterbereiche (138) mit oder ohne daran befindlicher Greifbacke (32') mit derjenigen Führung (56) indem Spannfutterkörper (30) in Ausrichtung zubringen, die sich in der Backenwechselposition befindet; und

(c) einem Backentransfermechanismus (36) zum Übertragen einer Greifbacke (32; 32') in geradliniger Weise zwischen der in der Backenwechselposition befindlichen Führung der Führungen (56) in dem Spannfutterkörper (30) und dem damit in Ausrichtung positionierten Halterbereich der Halterbereiche (138) des Backenmagazins (34), gekennzeichnet durch:

(d) eine Backenwechselanordnung (40) zur Anbringung im Gebrauch an einem stationären Bereich der Werkzeugmaschine (22), wobei die Backenwechselanordnung (40) das Backenmagazin (34) und den Backentransfermechanismus (36) aufweist und außerdem mit einem Längsrichtungs-Transportmechanismus (42) versehen ist zum Bewegen der Backenwechselanordnung (40) in Längsrichtung der Arbeitsspindel (26) relativ zu dieser zwischen einer von dem Spannfutter (28) abgelegenen, ersten Stellung und einer nahe bei dem Spannfutter (28) befindlichen, zweiten Stellung; und

(e) eine Backenführung (38), die als Teil der Backenwechselanordnung (40) vorgesehen ist und bei in ihrer zweiten Stellung befindlicher Backenwechselanordnung (40) zwischen dem Backenmagazin (34) und dem Spannfutterkörper (30) angeordnet ist, um eine im wesentlichen kontinuierliche, geradlinige Führungsbahn (140, 226, 56) zwischen dem Backenmagazin (34) und dem Spannfutterkörper (30) zum Transfer einer Greifbacke (32; 32') mittels des Backentransfermechanismus (36) zu schaffen, wodurch sich jede gewünschte Greifbacke (32; 32') von einem der Halterbereiche (138) des Backenmagazins (34) in eine der Führungen (56) in dem Spannfutterkörper (30) und umgekehrt exakt transferieren läßt.

2. Spannbackenwechsler nach Anspruch 1, weiterhin mit einem Positioniermechanismus (46) zum Halten einer jeglichen Führung (56) in dem Spannfutterkörper (30) in der exakten Backenwechselposition durch Verriegeln des Spannfutterkörpers gegen Verschiebung relativ zu der Backenführung (38).

3. Spannbackenwechsler nach Anspruch 1, weiterhin mit einem Positioniermechanismus (46) zum Halten eines jeglichen Halterbereichs (138) des Backenmagazins (34) exakt in Ausrichtung mit der Backenführung (38) durch Verriegeln des Backenmagazins gegen Verschiebung relativ zu der Backenführung.

4. Spannbackenwechsler nach Anspruch 1, weiterhin mit einem Positioniermechanismus (46) zum Halten eines jeglichen Halterbereichs (138) des Backenmagazins (34) exakt in Ausrichtung mit derjenigen Führung (56) in dem Spannfutterkörper (30), die in der Backenwechselposition gehalten ist, durch Verriegeln sowohl des Backenmagazins als auch des Spannfutterkörpers gegen Verschiebung relativ zu der Backenführung (38).

5. Spannbackenwechsler nach einem der Ansprüche 1 bis 4, wobei das Spannfutter (28) weiterhin aufweist:

(a) eine Mehrzahl von Gleitstücken (54), die jeweils in einen in dem Spannfutterkörper (30) definierten zweiten Satz radialer Führungen (52) eingreifen und den jeweiligen Greifbacken (32) gegenüberliegen, die in den erstgenannten Satz radialer Führungen (56) in dem Spannfutterkörper eingreifen;

(b) einen Verriegelungsmechanismus (60) zum Verriegeln einer jeden Greifbacke gegen Verschiebung relativ zu dem jeweils gegenüberliegenden Gleitstück; und

(c) eine auf die Gleitstücke wirkende Einrichtung (76) zum Bewegen der Greifbacken in Radialrichtung des Spannfutterkörpers.

6. Spannbackenwechsler nach Anspruch 5, weiterhin mit einem Entriegelungsmechanismus (86) zum Veranlassen eines der Verriegelungsmechanismen (60) des Spannfutters (28) zum Entriegeln der Greifbacke (32), die mit der in der Backenwechselposition gehaltenen Führung (56) des ersten Satzes von Führungen (56) in dem Spannfutterkörper in Eingriff steht.

7. Spannbackenwechsler nach Anspruch 6, wobei das Spannfutter (28) außerdem ein Entriegelungselement (82) aufweist, das derartaktivierbar ist, daß jeder Verriegelungsmechanismus (60) zum Entriegeln der entsprechenden Greifbacke (32) veranlaßt werden kann, und wobei der Entriegelungsmechanismus (84) einen fluidbetätigten Zylinder (50) zum Aktivierender Entriegelungselemente aufweist.

8. Spannbackenwechsler nach Anspruch 7, weiterhin mit einem Detektor (250) zum Feststellen der Tatsache, daß bei Beendigung der Aktivierung jedes Entriegelungselements (82) durch den fluidbetätigten Zylinder (50) der entsprechende Verriegelungsmechanismus (60) diejenige Greifbacke (32) verriegelt hat, die mit der in der Backenwechselposition gehaltenen Führung (56) des ersten Satzes von Führungen (56) in dem Spannfutterkörper (30) in Eingriff steht.

9. Spannbackenwechsler nach Anspruch 5, wobei das Spannfutter (28) außerdem ein Entriegelungselement (82) aufweist, das derart aktivierbar ist, daß jeder Verriegelungsmechanismus (60) zum Entriegeln der entsprechenden Greifbacke (32) veranlaßt werden kann, und wobei der Spannbackenwechsler weiterhin aufweist:

(a) einen fluidbetätigten Zylinder (50), der mit der Backenführung (38) im wesentlichen einstückig ausgebildet ist;

(b) einen Drückstift (244) an einer Kolbenstange (236) des fluidbetätigten Zylinders zum Aktivieren eines jeden Entriegelungselements des Spannfutters; und

(c) einen an der Kolbenstange des fluidbetätigten Zylinders vorgesehenen Positionierstift (242), der mit einer Bohrung (246) in jedem Gleitstück (54) des Spannfutters in Eingriff zu bringen ist, um jegliche Führung des ersten Satzes von Führungen (56) in dem Spannfutterkörper (30) in der exakten Backenwechselposition in bezug auf die Backenführung zu halten.

10. Spannbackenwechsler nach Anspruch 9, wobei es sich bei dem fluidbetätigten Zylinder (50) um einen doppelendigen Stangenzylinder handelt, der eine zweite Kolbenstange (238) beinhaltet, die durch Verriegeln des Backenmagazins gegen Verschiebung relativ zu der Backenführung (38) dazu ausgelegt ist, das Backenmagazin (34) derart zu positionieren, daß jeder gewünschte Halterbereich (138) desselben exakt in Ausrichtung mit der in der Backenwechselposition gehaltenen Führung (56) des ersten Satzes von Führungen (56) in dem Spannfutterkörper (30) gehalten ist.

11. Spannbackenwechsler nach Anspruch 10, wobei die zweite Kolbenstange (238) des doppelendigen Stangenzylinders (50) das Backenmagazin (34) durch Mittel positioniert, die umfassen:

(a) eine Positionierklinke (264) an dem Ende der zweiten Kolbenstange; und

(b) eine Einrichtung, die eine Mehrzahl von Kerben (266) an winkelmäßig voneinander beabstandeten Stellen an dem Backenmagazin definiert;

(c) wobei die Positionierklinke zusammen mit dem Betrieb des doppelendigen Stangenzylinders mit jeder der Kerben in Eingriff und außer Eingriff bewegbar ist.

12. Spannbackenwechsler nach Anspruch 10, wobei die zweite Kolbenstange (238) des doppelendigen Stangenzylinders (50) das Backenmagazin (34) durch Mittel positioniert, die umfassen:

(a) ein nicht drehbares Befestigungsteil (302), in dem eine Positionieröffnung (306) ausgebildet ist, durch die sich die zweite Kolbenstange (238) des doppelendigen Stangenzylinders hindurcherstreckt;

(b) einen Haken (308) an dem Ende der zweiten Kolbenstange, der sich in die Positionieröffnung in dem Befestigungsteil hinein sowie aus dieser heraus bewegen läßt;

(c) eine Mehrzahl von Positionierelementen (312), die an dem Backenmagazin an winkelmäßig voneinander beabstandeten Stellen an diesem gleitend verschiebbar montiert sind, um eine Bewegung in Richtung auf den doppelendigen Stangenzylinder zu sowie von diesem weg auszuführen; und

(d) eine federnde Einrichtung (322), die jedes Positionierelement von dem doppelendigen Stangenzylinder weg vorspannt;

(e) wobei der Haken der zweiten Kolbenstange mit einem der Positionierelemente in Eingriff bringbar ist, wenn irgendeiner der Halterbereiche des Backenmagazins mit der in der Backenwechselposition befindlichen Führung (56) des ersten Satzes von Führungen (56) in dem Spannfutterkörper (30) in Ausrichtung gebracht ist, wobei die zweite Kolbenstange anschließend das damit in Eingriff befindliche Positionierelement gegen die Vorspannung der federnden Einrichtung in die Positionieröffnung zieht.

13. Spannbackenwechsler nach Anspruch 10, wobei die zweite Kolbenstange (238) des doppelendigen Stangenzylinders (50) das Backenmagazin (34) durch Mittel positioniert, die umfassen:

(a) einen Positionierstift (332), der durch ein nicht drehbares Teil (330) gleitend verschiebbar gelagert ist;

(b) wobei eine Mehrzahl winkelmäßig voneinander beabstandeter Aussparungen (334) in dem Backenmagazin vorgesehen ist und der Positionierstift mit jeder der Aussparungen in dem Backenmagazin in und außer Eingriff bringbar ist;

(c) eine federnde Einrichtung (336), die den Positionierstift normalerweise außer Eingriff von den Aussparungen in dem Backenmagazin hält; und

(d) eine Steuerflächeneinrichtung (340) an der zweiten Kolbenstange des doppelendigen Stangenzylinders zum Bewegen des Positionierstifts gegen die Kraft der federnden Einrichtung in eine der Aussparungen in dem Backenmagazin, wenn irgendeiner der Halterbereiche (138) des Backenmagazins in Ausrichtung mit der in der Backenwechselposition befindlichen Führung (56) des ersten Satzes von Führungen (56) in dem Spannfutterkörper (30) gebracht ist.

14. Spannbackenwechsler nach Anspruch 10, wobei die zweite Kolbenstange (238) des doppelendigen Stangenzylinders (50) das Backenmagazin (34) durch Mittel positioniert, die umfassen:

(a) ein Positionierelement (346), das an einem nicht drehbaren Teil (344) schwenkbar angebracht ist;

(b) wobei eine Mehrzahl winkelmäßig voneinander beabstandeter Aussparungen (354) in dem Backenmagazin vorgesehen ist und das Positionierelement mit jede der Aussparungen in dem Backenmagazin in Eingriff sowie außer Eingriff schwenkbar ist;

(c) eine federnde Einrichtung (360), die das Positionierelement normalerweise außer Eingriff von den Aussparungen in dem Backenmagazin hält; und (d) eine Steuerflächeneinrichtung (358) an der zweiten Kolbenstange des doppelendigen Stangenzylinders zum Verschwenken des Positionierelements gegen die Kraft der federnden Einrichtung in Eingriff mit einer der Aussparungen in dem Backenmagazin, wenn irgendeiner der Halterbereiche (138) des Backenmagazins in Ausrichtung mit der in der Backenwechselposition befindlichen Führung (56) des ersten Satzes von Führungen (56) in dem Spannfutterkörper (30) gebracht ist.

15. Spannbackenwechsler nach einem der Ansprüche 1 bis 14, wobei der Backentransfermechanismus (36) aufweist:

(a) eine Hakenanordnung (186), die mit den Greifbacken (32, 32') lösbar in Eingriff bringbar ist, um diese zwischen dem Spannfutterkörper (30) und dem Backenmagazin (34) zu transferieren;

(b) eine Einrichtung (178) zum Bewegen der Hakenanordnung zwischen dem Spannfutterkörper und dem Backenmagazin; und

(c) ein zurückziehbares Hakenbetätigungsglied (216), das auf der geradlinigen Führungsbahn zwischen dem Spannfutterkörper und dem Backenmagazin angeordnet ist, um die Hakenanordnung dazu zu veranlassen, mit einer Greifbacke an dem Spannfutterkörper in Eingriff zu treten sowie sich von dieser zu lösen.

16. Spannbackenwechsler nach Anspruch 15, wobei das Hakenbetätigungsglied (216) in der Backenführung (38) angeordnet ist.

17. Spannbackenwechsler nach Anspruch 16, wobei das Hakenbetätigungsglied (216) mit der Kolbenstange (236) des fluidbetätigten Zylinders (50) derart betriebsmäßig gekoppelt ist, daß es durch diese mit der Hakenanordnung (186) in Eingriff sowie außer Eingriff bewegbar ist.

18. Spannbackenwechsler nach einem der Ansprüche 15 bis 17, wobei die Hakenanordnung (186) des Backentransfermechanismus (36) aufweist:

(a) einen Hakenträger (188), der mit der Bewegungseinrichtung (178) gekoppelt ist und dadurch zwischen dem Spannfutterkörper (30) und dem Backenmagazin bewegbar ist;

(b) einen Haken (194), der an dem Hakenträger zur Ausführung einer Gleitbewegung zwischen einer ersten Stellung zum Eingriff mit den Greifbacken (32, 32') und einer zweiten Stellung zum Lösen von diesen angebracht ist;

(c) eine federnde Einrichtung (206) an dem Hakenträger, die den Haken normalerweise in der ersten Stellung hält; und

(d) einen Freigabeknopf (196), der ebenfalls an dem Hakenträger montiert ist und mit dem Haken bet riebsmäßig gekoppelt ist, um diesen zwischen der ersten und der zweiten Stellung zu bewegen, wobei der Freigabeknopf den Hakengegen die Kraft der federnden Einrichtung aus der ersten in die zweite Stellung bewegt, wenn das zurückziehbare Hakenbetätigungsglied (216) mit ihm in Eingriff bewegt wird.

19. Spannbackenwechsler nach einem der Ansprüche 1 bis 18, wobei die Halterbereiche (138) des Backenmagazins (34) in Form von Nuten (140) vorliegen, die in umfangsmäßiger Beabstandung voneinander in dem Backenmagazin ausgebildet sind, um die jeweiligen Greifbacken (32, 32') darin in gleitend verschiebbarer Weise aufzunehmen, und wobei eine ringförmige Backenauflage (168) unterdem Backenmagazin gehaltert ist, um die in den Nuten des Backenmagazins aufgenommenen Greifbacken darauf zu halten.

20. Spannbackenwechsler nach Anspruch 19, wobei die Backenauflage (168) relativ zu der Werkzeugmaschine drehfest ist und für die Passage der Greifbacken (32, 32'), die zwischen dem Spannfutterkörper (30) und dem Backenmagazin (34) transferiert werden, teilweise abgeschnitten ist (172).

21. Spannbackenwechsler nach Anspruch 20, wobei die obere Kante (174). der Backenauflage (168), an der die Greifbacken (32') gleitend verschiebbar gehalten sind, in ihrer Erstreckung in Richtung auf die einander entgegengesetzten Randbereiche der Backenauflage unter Eingrenzung des Teils, an dem die Backenauflage abgeschnitten ist, schräg nach unten verlaufend ausgebildet ist (176).

22. Spannbackenwechsler nach einem der Ansprüche 19 bis 21, wobei der Backentransfermechanismus (36) eine Hakenanordnung (186) aufweist, die dazu ausgelegt ist, an derjenigen Greifbacke (32') anzugreifen und diese zu halten, die in derjenigen Nut (140) in dem Backenmagazin (34) aufgenommen ist, die mit der in der Backenwechselposition befindlichen Führung der Führungen (56) in dem Spannfutterkörper (30) in Ausrichtung gebracht worden ist.

23. Spannbackenwechsler nach einem der Ansprüche 1 bis 22, wobei der Längsrichtungs-Transportmechanismus (42) aufweist:

(a) einen Schlitten (86), der an der Werkzeugmaschine (22) zwischen der ersten und der zweiten Stellung beweglich ist, wobei an dem Schlitten das Backenmagazin (34) drehbar angebracht ist und der Backentransfermechanismus (36) und die Backenführung (38) drehfest angebracht sind; und

(b) ein Betätigungsglied (90) an der Werkzeugmaschine zum Bewegen des Schlittens zwischen der ersten und der zweiten Stellung.

24. Spannbackenwechsler nach Anspruch 23, weiterhin mit einem Radial-Transportmechanismus (44) an dem Schlitten (86) des Längsrichtungs-Transportmechanismus (42) zum gemeinsamen Bewegen des Backenmagazins (34) und des Backentransfermechanismus (36) sowie der Backenführung (38) in Radialrichtung der Arbeitsspindel (26) der Werkzeugmaschine (22) relativ zu dem Schlitten, wobei bei in der zweiten Stellung befindlichem Schlitten das Backenmagazin und der Backentransfermechanismus sowie die Backkenführung zum Backenwechsel in Richtung auf das Spannfutter (28) zu bewegt werden und nach Beendigung des Backenwechsels von dem Spannfutter wegbewegt werden.

25. Spannbackenwechsler nach Anspruch 24, wobei der Radial-Transportmechanismus (44) aufweist:

(a) einen an dem Schlitten (86) vorgesehenen fluidbetätigten Zylinder (102), der sich in Radialrichtung der Arbeitsspindel (26) der Werkzeugmaschine erstreckt; und

(b) eine hohle Magazinspindel (128), die über den Zylinder gepaßt ist und relativ zu diesem gegen axiale Gleitbewegung festgelegt ist, wobei die Magazinspindel mit einer Kolbenstange (112) des Zylinders gekoppelt ist und dadurch in Radialrichtung der Arbeitsspindel hin- und herbewegbar ist;

(c) wobei an der Magazinspindel das Backenmagazin (34) drehbar angebracht ist und der Backentransfermechanismus (36) und die Backenführung (38) drehfest angebracht sind.

26. Spannbackenwechsler nach einem der Ansprüche 1 bis 25, weiterhin mit einem pneumatischen Reinigungssystem (48) zum Reinigen wenigstens des Spannfutters (28) und der Greifbacken (32, 32').

27. Spannbackenwechsler nach Anspruch 26, wobei das pneumatische Reinigungssystem (48) ein Luftkanalsystem (274) umfaßt, das aufweist:

(a) eine erste Luftaustrittseinrichtung (280, 284) zum Ausstoßen von auf das Spannfutter (28) gerichteter Druckluft;

(b) eine zweite Luftaustrittseinrichtung (290) zum Ausstoßen von Druckluft, die in Richtung auf diejenige Greifbacke (32') an dem Backenmagazin (34) gerichtet ist, die in den Spannfutterkörper (30) übertragen werden soll; und

(c) eine dritte Luftaustrittseinrichtung (296) zum Ausstoßen von Druckluft, die in Richtung auf diejenige Greifbacke (32, 32') gerichtet ist, die zwischen dem Spannfutterkörper und dem Backenmagazin übertragen wird.

## Revendications

1. Changeur de mâchoires de mandrin pour montage sur une machine-outil (22) ayant une broche de travail (26), comprenant:

a) un mandrin (28) ayant un corps de mandrin (30) montable sur la broche de travail (26) de la machine-outil (22) et un jeu de mâchoires de serrage (32), montées de façon interchangeable dans des guidages (56) radiaux respectifs définis dans le corps de mandrin (30), chacune des mâchoires de serrage (32) pouvant entrer et sortir en coulissant de l'un des guidages (56), lorsque ce guidage (56) se trouve sur le corps de mandrin (30) dans une position prédéterminée de changement de mâchoires.

b) un magasin de mâchoires (34) pour transfert, monté pivotant et servant sur la machine-outil (22) comportant une pluralité de parties support (138) pour maintenir, de façon detachable, des jeux supplémentaires de mâchoires de serrage (32') ainsi que le premier jeu de mâchoires de serrage mentionné (32) à mesure que ces dernières sont retirées du corps de mandrin (30), le magasin de mâchoires (34) étant en mesure de mettre l'une quelconque des parties de support (138), portant ou non une mâchoire de serrage (32') en alignement avec celui des guidages (56) du corps de mandrin (30) qui se trouve en position changement de mâchoire, et

c) un mécanisme (36) de transfert de mâchoires pour le transfert d'une mâchoire de serrage (32, 32') selon une trajectoire rectiligne, entre celui des guidages (56) du corps de mandrin (30) qui se trouve dans la position changement de mâchoire et celle des parties support (138) du magasin à mâchoires (34) qui est alignée avec lui, caractérisé par:

d) un ensemble (40) de changement de mâchoires, pour fixation en service sur une partie fixe de la machine-outil (22) comprenant le magasin à mâchoires (34) et le mécanisme (36) de transfert de mâchoires, et comportant de plus un mécanisme (42) de transfert longitudinal pour le déplacement de l'ensemble (40) de changement de mâchoire dans le sens longitudinal de la broche de travail (26) s'y référant, entre une première position éloignée du mandrin (28) et une deuxième position rapprochée du mandrin (28), et

e) un guide de mâchoire (38), disposé comme étant une partie de l'ensemble (40) de changement de mâchoire, et entre le magasin de mâchoires (34) et le corps de mandrin (30) lorsque l'ensemble (40) de changement de mâchoires se trouve dans sa deuxième position, pour constituer une piste de guidage (140, 226, 56) sensiblement continue et rectiligne entre le magasin de mâchoires (34) et le corps de mandrin (30) pour le transfert d'une mâchoire de serrage (32, 32') par le mécanisme (36) de transfert de mâchoires, au moyen duquel une mâchoire de serrage quelconque (32, 32') choisie, peut être transférée avec précision depuis l'une des parties de support (138) du magasin de mâchoires (34) dans l'un des guidages radiaux (56) du corps de mandrin (30) et réciproquement.

2. Changeur de mâchoires de mandrin selon la revendication 1 caractérisé par un mécanisme de positionnment (46) pour le maintien de l'un quelconque des guidages (56) du corps de mandrin (30) dans la position de changement de mâchoires précise, en interdisant tout déplacement du corps de mandrin (30) par rapport au guide de mâchoires (38).

3. Changeur de mâchoires de mandrin selon la revendication 1 caractérisé par le fait qu'il comporte un mécanisme de positionnement (46) pour maintenir l'une quelconque des parties de support (138) du magasin de mâchoires (34) en alignement exact avec le guide de mâchoires (38) en interdisant tout déplacement du magasin de mâchoires par rapport au guide de mâchoires.

4. Changeur de mâchoires selon la revendication 1, caractérisé par le fait qu'il comprend un mécanisme de positionnement (46) pour maintenir l'une quelconque des parties de support (138) du magasin de mâchoires (34) en alignment exact avec celui des guidages (56) du corps de mandrin (30) maintenu en position de changement de mâchoires en interdisant, tant au magasin de mâchoires qu'au corps de mandrin, tout déplacement par rapport au guide de mâchoires (38).

5. Changeur de mâchoires de mandrin selon l'une quelconque des revendications 1 à 4, caractérisé par le fait que le mandrin comprend aussi:

a) une pluralité de glissières (54), engagées chacune dans un deuxième jeu de guidages radiaux (52) définis dans le corps de mandrin (30) et disposés en face des mâchoires de serrage (32) correspondantes, engagées dans le premier jeu de guidages radiaux (56) mentionné du corps de mandrin.

b) un mécanisme de blocage (60) pour interdire à chacune des mâchoires de serrage tout déplacement par rapport à celle des glissières qui lui est opposée, et

c) des moyens (76) agissant sur les glissières pour déplacer les mâchoires de serrage radialemént au corps de mandrin.

6. Changeur de mâchoires de mandrin selon la revendication 5 caractérisé par le fait qu'il comprend aussi un mécanisme de déblocage (84) pour faire que l'un des mécanismes de blocage (60) du mandrin (28) libère la mâchoire de serrage (32) engagée dans celui du premier jeu de guidages (56) du corps de mandrin (30) qui est maintenu en position de changement de mâchoire.

7. Changeur de mâchoires de mandrin selon la revendication 6 caractérisé par le fait que le mandrin (28) comprend aussi un élément de déblocage (82) à actionner pour faire que chacun des mécanismes (60) de blocage libère la mâchoire de serrage (32) correspondante, le mécanisme de déblocage (84) comprenant un vérin (50) commandé par fluide pour l'actionnement des éléments de déblocage.

8. Changeur de mâchoires de mandrin selon la revendication 7 caractérisé par le fait qu'il comprend aussi un détecteur (250) pour la détection du fait que, après qu'a cessé l'actionnement de chaque élément de déblocage (82) par le vérin (50) commandé par fluide, le mécanisme 60) de blocage correspondant a bloqué la mâchoire de serrage (32) engagée dans celui du premier jeu de guidages (56) du corps de mandrin (30) qui est maintenu en position de changement de mâchoires.

9. Changeur de mâchoires de mandrin selon la revendication 5 caractérisé par le fait que le mandrin (28) comprend aussi un élément de déblocage (82) qui doit être actionné pour faire que chaque mécanisme de blocage (60) libère la mâchoire de serrage (32) correspondante, le changeur de mâchoires de mandrin comprenant de plus:

a) un vérin commandé par fluide (50) fait sensiblement intégré au guide de mâchoire (38)

b) une broche de poussée (244) agissant sur une tige de piston (236) du vérin commandé par fluide pour l'actionnement de chaque élément de déblocage du mandrin, et c) une broche de positionnement (242) de la tige de piston du vérin commandé par fluide devant pénétrer dans un alésage (246) de chaque glissière (54) du mandrin pour maintenir l'un quelconque du premier jeu de guidage (56) du corps de mandrin (30) dans la position exacte de changement de mâchoires par rapport au guide de mâchoire.

10. Changeur de mâchoires de vérin selon la revendication 9, caractérisé par le fait que le vérin (50) commandé par fluide est un vérin à tige à double extrémité comprenant une deuxième tige de piston (238) adaptée à positionner le magasin de mâchoires (34) sur n'importe laquelle des parties de support (138) choisie, maintenue exactement alignée avec celui du premier jeu de guidages (56) du corps de mandrin qui se trouve en la position de changement de mâchoires, en interdisant au magasin de mâchoires tout déplacement par rapport au guide de mâchoires (38).

11. Changeur de mâchoires de vérin selon la revendication 10, caractérisé par le fait que la deuxième tige de piston (238) du vérin (50) à tige à double extrémité positionne le magasin de mâchoires (34) par des moyens qui comprennent:

a) un cliquet de positionnement (264) à l'extrémité de la deuxième tige de piston et

b) des moyens définissant une pluralité d'encoches (266) en des positions espacées angulairement sur le magasin de mâchoires,

c) le cliquet de positionnement étant mobile pour entrer ou sortir de l'une quelconque des encoches lorsque travaille le vérin à tige à double extrémité.

12. Changeur de mâchoires de mandrin selon la revendication 10 caractérisé par le fait que la deuxième tige de piston (238) du vérin (50) à tige à double extrémité positionne le magasin de mâchoires (34) par des moyens comprenant:

a) Pièce de montage (302) non tournante dans laquelle est conformé un trou de positionnement (306) que traverse la deuxième tige de piston (238) du vérin à tige à double extrémité.

b) un crochet (308) à l'extrémité de la deuxième tige de piston pouvant entrer et sortir du trou de positionnement de la pièce de montage,

c) Une pluralité d'éléments de positionnement (312) montés coulissants sur le magasin de mâchoires en des positions espacées angulairement permettant un mouvement se rapprochant et s'écartant du vérin à tige à double extrémité et

d) Des moyens élastiques (322) écartant chaque élément de positionnement du vérin à tige à double extrémité,

e) Le crochet de la deuxième tige de piston pouvant engager l'un des éléments de positionnement lorsque l'une quelconque des parties de support du magasin de mâchoires est mise en alignement avec celui du premier jeu de guidages (56) qui se trouve en position de changement de mâchoires, la deuxième tige de piston tirant ensuite l'élément de positionnement engagé dans le trou de positionnement en surmontant la déviation des moyens élastiques.

13. Changeur de mâchoires de mandrin selon la revendication 10, caractérisé par le fait que la deuxième tige de piston (238) du vérin (50) à tige à double extrémité positionne le magasin à mâchoires (34) par des moyens comprenant:

a) une broche de positionnement (332) portée coulissante sur une pièce non tournante (330),

b) le magasin de mâchoires portant une pluralité de cavités (334) espacées angulairement, la broche de positionnement peut entrer et sortir de l'une quelconque de ces cavités.

c) des moyens élastiques (336) maintenant normalement la broche en dehors des cavités du magasin de mâchoires et

d) des moyens de came (340) sur la deuxième tige de piston du vérin à tige à double extrémité pour déplacer la broche de positionnement et la faire entrer dans l'une des cavités du magasin de mâchoires par opposition à la force des moyens élastiques lorsque l'une quelconque des parties de support (138) du magasin de mâchoires est alignée avec celui du premier jeu de guidage (56) du corps de mandrin (30) qui se trouve en position de changement de mâchoires.

14. Changeur de mâchoires de mandrin selon la revendication 10 caractérisé par le fait que la deuxième tige de piston (238) du vérin (50) à tige à double extrémité positionne le magasin à mâchoires (34) par des moyens comprenant:

a) Un élément de positionnement (346) monté pivotant sur une pièce non tournante (344),

b) le magasin de mâchoires portant une pluralité de cavités (354) espacées angulairement, l'élément de positionnement pouvant pivoter pour entrer ou sortir de l'une des cavités du magasin de mâchoires,

c) des moyens élastiques (360) maintenant normalement l'élément de positionnement en dehors des cavités du magasin de mâchoires et,

d) des moyens de cames (358) sur la deuxième tige de piston du vérin à tige à double extrémité pour faire pivoter l'élément de pivotement de manière qu'il pénètre dans l'une des cavités du magasin de mâchoires en s'opposant à la force des moyens élastiques lorsque l'une quelconque des parties de support (138) du magasin de mâchoires est aligné avec celui du premier jeu de guidages (56) du corps de mandrin (30) qui se trouve dans la position de changement de mâchoires.

15. Changeur de mâchoires de mandrin selon l'une des revendications 1 à 14, caractérisé par le fait que le mécanisme de transfert (36) de mâchoires comprend:

a) Un ensemble crochet (186) pouvant engager, de façon détachable, les mâchoires de serrage (32, 32') pour leur transfert entre le corps de mandrin (30) et le magasin de mâchoires (34),

b) Des moyens (178) de déplacement de l'ensemble crochet entre le corps de mandrin et le magasin de mâchoires et,

c) Un actuateur de crochet rétractable (216) disposé sur la piste de guidage rectiligne entre le corps de mandrin et le magasin pour faire engager et libérer une mâchoire de serrage sur le corps de mandrin.

16. Changeur de mâchoires de mandrin selon la revendication 15, caractérisé par le fait que l'actuateur de crochet (216) est monté sur le guide de mâchoires (38).

17. Changeur de mâchoires de mandrin selon la revendication 16 caractérisé par le fait que l'actuateur de crochet (216) est accouplé fonctionnellement à la tige de piston (236) du vérin (50) commandé par fluide, de manière à être déplacé par lui pour engager et libérer l'ensemble crochet (186).

18. Changeur de mâchoires de mandrin selon l'une quelconque des revendications 15 à 17, caractérisé par le fait que l'ensemble crochet (186) du mécanisme (36) de changement de mâchoire comprend:

a) un support de crochet (188) accouplé au moyens de déplacement (178) pour être déplacé par eux entre le corps de mandrin (30) et le magasin de mâchoires (34),

b) un crochet (194) monté sur le support de crochet pour le glissement entre une première position avec engagement des mâchoires de serrage (32, 32') et une deuxième position pour désengagement de ces mâchoires,

c) des moyens élastiques (206) sur le support de crochet maintenant normalement le crochet dans la première position et,

d) un bouton de désengagement (196) monté lui aussi sur le support de crochet et accouplé fonctionnellement au crochet pour le déplacer entre les première et deuxième positions, le bouton de dégagement déplaçant le crochet de la première à la deuxième position par opposition à la force des moyens élastiques quand il est amené à engager l'actuateur de crochet rétractable (216).

19. Changeur de mâchoires de mandrin selon l'une quelconque des revendications 1 à 18, caractérisé par le fait que les parties de support (138) du magasin de mâchoires (34) sont en forme de rainures (140) définies dans le magasin de mâchoires en espacement circonférentiel pour y recevoir par coulissement les mâchoires de serrage (32, 32') correspondantes et qu'un support de mâchoires annulaire (168) est maintenu en dessous du magasin de mâchoires pour y maintenir les mâchoires de serrage présentes dans les rainures du magasin de mâchoires.

20. Changeur de mâchoires de mandrin selon la revendication 19, caractérisé par le fait que le support da mâchoire (168) ne tourne pas par rapport à la machine-outil et est échancré en partie pour le passage des mâchoires de serrage (32, 32') en cours de transfert entre le corps de mandrin (30) et le magasin de mâchoires (34).

21. Changeur de mâchoires de mandrin selon la revendication 20, caractérisé par le fait que le rebord supérieur (174) du support de mâchoires (168) qui y maintient coulissantes les mâchoires de serrage (32') forme une déclivité descendante (176) à mesure qu'il s'étend vers les extrémités opposées du support de mâchoire en délimitant la partie échancrée.

22. Changeur de mâchoires de mandrin de l'une quelconque des revendications 19 à 21, caractérisé par le fait que le mécanisme (36) de transfert de mâchoires comprend un ensemble de crochet (186) pouvant engager et maintenir la mâchoire de serrage (32') reçue dans celle des rainures (140) du magasin de mâchoires (34) qui a été mise en alignement avec celui des guidages (56) du corps de mandrin (30) qui est en position de changement de mâchoires.

23. Changeur de mâchoires de mandrin de l'une quelconque des revendications 1 à 22, caractérisé par le fait que le mécanisme (42) de transfert longitudinal comprend:

a) un chariot (86) mobile sur la machine-outil (22) entre une première et une deuxième position, le chariot portant le magasin à mâchoires monté pivotant, et le mécanisme de transfert (36) de mâchoires ainsi que le guide de mâchoires montés non pivotants et,

b) un actuateur monté sur la machine-outil pour le déplacement du chariot entre la première et la deuxième position.

24. Changeur de mâchoires de mandrin selon la revendication 23 caractérisé par le fait qu'il comprend encore un mécanisme (44) de transfert radial sur le chariot (86) du mécanisme (42) de transfert longitudinal pour déplacer conjointement le magasin de mâchoires (34) et le mécanisme de transfert de mâchoire (36) et le guide de mâchoire (38) dans le sens radial de la broche de travail (26) de la machine-ouil (22) relativement au chariot, le magasin de mâchoires et le mécanisme de transfert de mâchoires et le guide de mâchoires étant mus, quand le chariot est dans la deuxième position, en direction du mandrin (28) pour le changement de mâchoire, et dans la direction opposée au mandrin, une fois achevé le changement de machoire.

25. Changeur de mâchoires de mandrin selon la revendication 24, caractérisé par le fait que le mécanisme de transfert radial (44) comprend:

a) un vérin (102) commandé par fluide sur le chariot (86), s'étendant dans le sens radial de la broche de travail (26) de la machine-outil et,

b) une broche de magasin creuse (128) montée pardessus le vérin et contrainte à un mouvement de glissement axial par rapport à lui, la broche de magasin étant accouplée à une tige de piston (112) du vérin pour être mue par lui radialement à la broche de travail,

c) la broche de magasin ayant un magasin de mâchoires (34) monté pivotant sur elle, et le mécanisme de transfert de mâchoires (36) et le guide de mâchoires (38) montés non pivotants.

26. Changeur de mâchoires de mandrin selon l'une quelconque des revendications 1 à 25, caractérisé par le fait qu'il comprend aussi un système de nettoyage pneumatique (48) pour nettoyer au moins le mandrin (28) et les mâchoires de serrage (32, 32').

27. Changeur de mâchoires de mandrin selon la revendication 26, caractérisé par le fait que le système de nettoyage pneumatique (48) comprend un système de canalisations d'air (274) présentant:

a) de premiers moyens de sortie d'air (280, 284) pour chasser de l'air sous pression dirigé vers le mandrin (28),

b) de deuxièmes moyens de sortie d'air (290) pour chasser de l'air sous pression dirigé vers la mâchoire de serrage (32') du magasin de mâchoires (34) qui doit être transférée sur le corps de mandrin (30), et

c) de troisièmes moyens de sortie d'air (296) pour, chasser de l'air sous pression dirigé vers la mâchoire de serrage (32, 32') en cours de transfert entre le corps de mandrin et le magasin de mâchoires.

FIG. 1

EP 0 106 359 B1

# FIG. 2

EP 0 106 359 B1

FIG. 3

# FIG. 4

FIG. 8

FIG. 6

FIG. 5

FIG. 7

# FIG. 9

# FIG. 10

EP 0 106 359 B1

# FIG. 11

268  266
264
272  238  46
262  232
50
254
252  248
256  234  240
236  84
250
242  244  28
30  82
54
246

# FIG. 12

238
264  272

# FIG. 13

266  268

EP 0 106 359 B1

# F I G . 14

178

216

234

188

206
186
214
194
186

32

58

30

# FIG. 15

# FIG. 16

178

186
66
140

34

214

32

296

226   38

280

290

48

284

30

# FIG. 17

# FIG. 18

34   140   336   340   342   338   328   302   238   234   232   50   334   332   330   38   226

# FIG. 19

34   140   346   348   350   358   356   352   354   302   328   344   360   238   234   50   232   38

EP 0 106 359 B1